# EUROPÄISCHE PATENTSCHRIFT

(11) **EP 4 615 746 B1**
(45) Veröffentlichungstag und Bekanntmachung des Hinweises auf die Patenterteilung: **25.11.2026**
(21) Anmeldenummer: 23801715.6
(22) Anmeldetag: 03.11.2023
(51) Int. Cl.: B62M 6/45, B60L 50/20, B62M 6/55, B62M 11/14, F16H 3/72

(54) **VERFAHREN ZUR STEUERUNG EINER ANTRIEBSEINRICHTUNG FÜR EIN MUSKELKRAFTBETRIEBENES FAHRZEUG**
METHOD FOR CONTROLLING A DRIVE DEVICE FOR A MUSCLE-POWERED VEHICLE
PROCÉDÉ DE COMMANDE D'UN DISPOSITIF D'ENTRAÎNEMENT POUR UN VÉHICULE À PROPULSION MUSCULAIRE

(30) Priorität: 07.11.2022 DE 102022211693
(43) Veröffentlichungstag der Anmeldung: 17.09.2025
(73) Patentinhaber: ZF Friedrichshafen AG, 88046 Friedrichshafen (DE)
(72) Erfinder: KALTENBACH, Johannes, 88048 Friedrichshafen (DE); RECHENBACH, Philipp, 88677 Markdorf (DE); KUTTER, Fabian, 88079 Kressbronn (DE); GRIESMEIER, Uwe, 88677 Markdorf (DE)
(74) Vertreter: ZF Friedrichshafen AG
(86) Internationale Anmeldenummer: PCT/EP2023/080653
(87) Internationale Veröffentlichungsnummer: WO 2024/099894

(56) Entgegenhaltungen:
- DE-A1- 102017 219 607
- US-A1- 2017 217 537

## Beschreibung

### Technisches Gebiet

Die vorliegende Erfindung betrifft ein Verfahren zur Steuerung einer Antriebseinrichtung für ein muskelkraftbetriebenes Fahrzeug, wobei Muskelkraft über ein Überlagerungsgetriebe zum Antreiben des Fahrzeugs übertragen wird und ein Übersetzungsverhältnis am Überlagerungsgetriebe einstellbar ist. Die vorliegende Erfindung betrifft ferner ein als Fahrrad ausgebildetes Fahrzeug, welches ein Steuergerät zum Ausführen des Verfahrens zur Steuerung der Antriebseinrichtung aufweist.

### Stand der Technik

Aus dem Stand der Technik sind Verfahren zur Steuerung von Antriebseinrichtungen für muskelkraftbetriebene Fahrzeuge bekannt, bei welchen mittels einer elektrischen Maschine ein Übersetzungsverhältnis eines Überlagerungsgetriebes der Antriebseinrichtung einstellbar ist. Dabei sind Verfahren bekannt, mittels welcher ein gewünschtes Übersetzungsverhältnis am Überlagerungsgetriebe einstellbar ist.

DE 10 2017 219 607 A1 offenbart eine Antriebsanordnung für ein Pedelec mit einer Tretkurbelwelle und mit einem ersten elektrischen Antrieb, welche über zumindest einen ersten Planetenradsatz mit einem Abtrieb gekoppelt sind, wobei der Abtrieb über zumindest einen weiteren Planetenradsatz mit einem zweiten elektrischen Antrieb gekoppelt ist.

### Darstellung der Erfindung

Die vorliegende Erfindung betrifft in einem ersten Aspekt ein Verfahren zur Steuerung einer Antriebseinrichtung für ein muskelkraftbetriebenes Fahrzeug. Das muskelkraftbetriebene Fahrzeug kann ein Fahrrad, beispielsweise ein Pedelec, sein. Das Fahrzeug kann ein Steuergerät zum Ausführen des Verfahrens zur Steuerung der Antriebseinrichtung aufweisen. Die Antriebseinrichtung weist eine Kurbelwelle, eine erste elektrische Maschine, eine zweite elektrische Maschine, ein Überlagerungsgetriebe und einen Freilauf auf, wobei die Kurbelwelle über den Freilauf mit dem Überlagerungsgetriebe koppelbar ist. Die Antriebseinrichtung ist eingerichtet, Muskelkraft eines Fahrers von der Kurbelwelle über das Überlagerungsgetriebe auf ein Abtriebsrad zu übertragen. Muskelkraft des Fahrers des Fahrzeugs kann über Pedale, welche mittels Kurbelarmen an der Kurbelwelle befestigbar sind, aufgenommen werden. Der Freilauf ist dazu eingerichtet ist, um Kraftübertragung in Richtung der Kurbelwelle in zumindest eine Drehrichtung zu verhindern. Das Überlagerungsgetriebe kann beispielsweise ein Planetengetriebe aufweisen. Das Abtriebsrad kann mit einer Kraftübertragungsvorrichtung, beispielsweise einer Kette oder einem Riemen, mit einem Antriebsrad eines angetriebenen Rads des Fahrzeugs verbindbar sein. Mit dem Überlagerungsgetriebe ist die erste elektrische Maschine gekoppelt. Mit dem Überlagerungsgetriebe ist die zweite elektrische Maschine gekoppelt. Dabei kann Drehmoment zwischen der ersten elektrischen Maschine und dem Überlagerungsgetriebe in zumindest eine, beispielsweise in beide Richtungen übertragen werden. Die erste elektrische Maschine kann einen Rotor aufweisen, welche drehfest mit einem Teil des Überlagerungsgetriebes verbindbar ist. Die erste elektrische Maschine kann einen Stator aufweisen, welcher drehfest mit einem Gehäuse der Antriebseinrichtung verbindbar ist. Die erste elektrische Maschine kann mit einem Energiespeicher, beispielsweise einer Batterie, des Fahrzeugs verbunden sein, und die erste elektrische Maschine kann eingerichtet sein, mittels im Energiespeicher gespeicherter Energie motorisch betrieben zu werden. Durch Einstellen einer Drehzahl der ersten elektrischen Maschine wird ein Übersetzungsverhältnis am Überlagerungsgetriebe zwischen der Kurbelwelle und dem Abtriebsrad eingestellt. Beispielsweise kann das Übersetzungsverhältnis stufenlos zwischen einem minimalen und einem maximalen Übersetzungsverhältnis eingestellt werden. Das Steuergerät zur Steuerung der Antriebseinrichtung nach dem Verfahren kann dabei eingerichtet sein, das Einstellen der Drehzahl zum Einstellen des Übersetzungsverhältnisses am Überlagerungsgetriebe ausführen.

Das Verfahren weist ein fortgesetztes Bestimmen, ob eine Rotation der Kurbelwelle zum Antreiben des Fahrzeugs vorliegt, auf. Das fortgesetzte Bestimmen kann dabei in regelmäßigen Zeitabständen und alternativ oder zusätzlich ereignisgesteuert erfolgen. Eine Rotation der Kurbelwelle zum Antreiben des Fahrzeugs kann beispielsweise vorliegen, wenn der Fahrer in die Pedale tritt und dabei Muskelkraft zum Antreiben aufgenommen wird und über das Abtriebsrad zum Antreiben des Fahrzeugs abgegeben wird. Keine Rotation der Kurbelwelle zum Antreiben des Fahrzeugs kann beispielsweise vorliegen, wenn der Fahrer die Kurbelarme lediglich mit kleinen Bewegungen rotiert, wobei kleine Bewegungen beispielsweise weniger als eine halbe Umdrehung der Kurbelwelle sein können. Das fortgesetzte Bestimmen kann dabei einen zeitlichen Verlauf der Rotation der Kurbelwelle zum Antreiben des Fahrzeugs bestimmen.

Falls bestimmt wird, dass eine Rotation der Kurbelwelle zum Antreiben des Fahrzeugs vorliegt, erfolgt ein Regeln der Drehzahl der ersten elektrischen Maschine. Das Regeln der ersten elektrischen Maschine erfolgt, um ein vorbestimmtes Übersetzungsverhältnis am Überlagerungsgetriebe zu erzeugen. Das Regeln kann mit einem dynamischen PID-Regler erfolgen. Information zum vorbestimmten Übersetzungsverhältnis kann in einem Speicher des Steuergeräts gespeichert sein. Beispielsweise kann eine Tabelle, welche Information zum vorbestimmten Übersetzungsverhältnis umfassen kann, im Speicher des Steuergeräts zum Ausführen des Verfahrens gespeichert sein. Das vorbestimmte Übersetzungsverhältnis kann dabei in Abhängigkeit von Eingangsgrößen bestimmbar sein. Je nach gewünschtem vorbestimmten Übersetzungsverhältnis kann eine Zieldrehzahl bestimmbar sein, auf welche die erste elektrische Maschine geregelt werden kann. Im Fall eines fortgesetzten Bestimmens, dass Rotation der Kurbelwelle zum Antreiben des Fahrzeugs vorliegt, kann der Schritt des Regelns der Drehzahl der ersten elektrischen Maschine, um das vorbestimmte Übersetzungsverhältnis am Überlagerungsgetriebe zu erzeugen, fortgesetzt ausgeführt werden.

Falls bestimmt wird, dass Rotation der Kurbelwelle zum Antreiben des Fahrzeugs nicht mehr vorliegt, erfolgt ein Regeln der Drehzahl der ersten elektrischen Maschine für maximal eine vorbestimmte Zeitdauer, um das Übersetzungsverhältnis am Überlagerungsgetriebe in einem Bereich des Übersetzungsverhältnisses zu halten, das am Überlagerungsgetriebe bei dem Bestimmen eingestellt war, dass keine Rotation der Kurbelwelle zum Antreiben des Fahrzeugs vorliegt. Das Bestimmen, dass Rotation der Kurbelwelle zum Antreiben des Fahrzeugs nicht mehr vorliegt, kann dabei vom fortgesetzten Bestimmen umfasst sein. Über den zeitlichen Verlauf der Rotation der Kurbelwelle kann bestimmt werden, dass Rotation nicht mehr vorliegt. Das Regeln der Drehzahl, um das Übersetzungsverhältnis in dem Bereich des Übersetzungsverhältnisses zu halten, kann mit einem dynamischen PID-Regler erfolgen. Die vorbestimmte Zeitdauer kann beispielsweise wenige Sekunden, etwa 10 Sekunden, betragen. Der Bereich des Übersetzungsverhältnisses kann ein absoluter und alternativ oder zusätzlich ein relativer Bereich des Übersetzungsverhältnisses sein. Beispielsweise kann der Bereich 10% über- und unterhalb des Übersetzungsverhältnisses liegen, welches eingestellt war, als keine Rotation der Kurbelwelle zum Antreiben des Fahrzeugs mehr vorlag. Alternativ kann der Bereich durch einen absoluten Wert ober- oder unterhalb des Übersetzungsverhältnisses definiert sein. Das Übersetzungsverhältnis kann in dem Bereich des Übersetzungsverhältnisses gehalten werden, das am Überlagerungsgetriebe zu dem Zeitpunkt eingestellt war, als erstmalig bestimmt wurde, dass keine Rotation der Kurbelwelle mehr zum Antreiben des Fahrzeugs vorliegt, nachdem fortgesetzt bestimmt worden ist, dass Rotation der Kurbelwelle zum Antreiben des Fahrzeugs vorlag. Das Halten des Übersetzungsverhältnisses in dem Bereich kann ein Halten auf einem konstanten Niveau des Übersetzungsverhältnisses sein. Alternativ kann das Halten in dem Bereich des Übersetzungsverhältnisses ein lineares Anpassen des Übersetzungsverhältnisses innerhalb des Bereichs umfassen.

Falls bis zum Verstreichen der vorbestimmten Zeitdauer fortgesetzt bestimmt wird, dass keine Rotation der Kurbelwelle zum Antreiben des Fahrzeugs vorliegt, erfolgt ein Regeln der Drehzahl der ersten elektrischen Maschine nach Verstreichen der vorbestimmten Zeitdauer, um das Übersetzungsverhältnis am Überlagerungsgetriebe basierend auf einem vorbestimmten zeitlichen Verlauf zu verringern. Der Regler zum Regeln der Drehzahl nach Verstreichen der vorbestimmten Zeitdauer kann ein dynamischer PID-Regler sein. Das Übersetzungsverhältnis am Überlagerungsgetriebe kann bis zu einem minimalen Übersetzungsverhältnis verringert werden. Das Übersetzungsverhältnis kann von dem Wert an verringert werden, welches am Überlagerungsgetriebe eingestellt war, als erstmalig keine Rotation der Kurbelwelle zum Antreiben des Fahrzeugs vorlag. Beim Regeln der Drehzahl zum Verringern des Übersetzungsverhältnisses kann die Drehzahl der ersten elektrischen Maschine verringert werden. Das minimal einstellbare Übersetzungsverhältnis kann ein Übersetzungsverhältnis für einen Betrieb des Fahrzeugs während einer langsamen Fahrgeschwindigkeit ermöglichen, während ein größeres Übersetzungsverhältnis den Betrieb des Fahrzeugs bei höheren Fahrgeschwindigkeiten ermöglicht.

Mit dem Verfahren ist ein Steuern der Antriebseinrichtung gezeigt, wobei während der vorbestimmten Zeitdauer das Übersetzungsverhältnis in dem Bereich des Übersetzungsverhältnisses gehalten werden kann, welches bei Rotation der Kurbelwelle zum Antreiben des Fahrzeugs vorliegt, also für ein Pedalieren durch den Fahrer passend eingestellt sein kann. Das Übersetzungsverhältnis in den ersten zwei Schritten des Regelns kann damit beispielsweise gleich sein. Der Fahrer kann beispielsweise nicht unterscheiden, in welchem dieser beiden ersten Schritte des Regelns sich die Steuerung befindet, denn das Übersetzungsverhältnis in den beiden Schritten des Regelns kann vergleichbar sein. Im letzten Schritt des Regelns kann eine Verringerung des Übersetzungsverhältnisses erfolgen, daher kann der Fahrer den letzten Schritt von den ersten beiden Schritten unterscheiden, denn dieser kann ein verringertes Übersetzungsverhältnis am Überlagerungsgetriebe aufweisen. Damit kann ein Übersetzungsverhältnis am Überlagerungsgetriebe mittels des dritten Schritts des Regelns erzeugbar sein, welches nicht optimal zum Antreiben mittels Muskelkraft sein kann. Gleichzeitig kann durch Verringern des Übersetzungsverhältnisses auch die Drehzahl der ersten elektrischen Maschine verringert und abgesenkt werden. Dies kann Energie, welche zum Betreiben der ersten elektrischen Maschine nötig ist, sparen. Somit kann in den ersten beiden Schritten des Regelns pro Zeiteinheit mehr Energie zum Regeln der ersten elektrischen Maschine notwendig sein als im dritten Schritt des Regelns, wenn das Übersetzungsverhältnis verringert wird. In anderen Worten kann die Leistungsaufnahme der ersten elektrischen Maschine in verschiedenen Schritten des Regelns unterschiedlich sein, wobei sie in den ersten beiden Schritten des Regelns nahezu gleich sein kann, da das Übersetzungsverhältnis in dem Bereich des Übersetzungsverhältnisses gehalten wird, welches eingestellt war, als erstmalig keine Rotation der Kurbelwelle zum Antreiben des Fahrzeugs mehr vorlag, nachdem Rotation zum Antreiben des Fahrzeugs vorlag.

Gemäß einer weiteren Ausführungsform kann das Regeln der ersten elektrischen Maschine, um das vorbestimmte Übersetzungsverhältnis am Überlagerungsgetriebe zu erzeugen, erfolgen. Dies kann erfolgen, falls nach Verstreichen der vorbestimmten Zeitdauer, in welcher fortgesetzt bestimmt wurde, dass keine Rotation der Kurbelwelle zum Antreiben des Fahrzeugs vorliegt, bestimmt wird, dass eine Rotation der Kurbelwelle zum Antreiben des Fahrzeugs vorliegt. Das Regeln, um das vorbestimmte Übersetzungsverhältnis zu erzeugen, kann dann erfolgen, wenn Rotation der Kurbelwelle wieder zum Antreiben des Fahrzeugs vorliegt, nachdem für mindestens die vorbestimmte Zeitdauer keine Rotation der Kurbelwelle zum Antreiben des Fahrzeugs vorlag. Ein Übergang vom verringerten Übersetzungsverhältnis zum vorbestimmten Übersetzungsverhältnis kann beispielsweise linear erfolgen, indem das Übersetzungsverhältnis von einem verringerten Übersetzungsverhältnis auf das vorbestimmte Übersetzungsverhältnis linear über die Zeit erhöht wird.

Gemäß dem Verfahren kann somit auf ein erneutes Pedalieren des Fahrers, erfasst und bestimmt über die Rotation der Kurbelwelle zum Antreiben des Fahrzeugs, reagiert werden und das Übersetzungsverhältnis im Überlagerungsgetriebe kann durch Einstellen der Drehzahl der ersten elektrischen Maschine geändert werden, um das vorbestimmte Übersetzungsverhältnis am Überlagerungsgetriebe zu erzeugen. Somit kann das Verfahren einen Übergang vom verringerten Übersetzungsverhältnis, wenn das Fahrzeug beispielsweise antriebsfrei rollt, zum vorbestimmten Übersetzungsverhältnis bereitstellen, wenn das Fahrzeug beispielsweise durch Muskelkraft des Fahrers angetrieben wird.

Gemäß einer weiteren Ausführungsform kann das Verfahren ferner ein Erfassen einer Drehzahl eines Rads des Fahrzeugs aufweisen. Beispielsweise kann das Rad ein angetriebenes Rad, wie ein angetriebenes Hinterrad des Fahrzeugs, sein. Das Erfassen kann bezüglich der Drehzahl des angetriebenen Rads, wie des Hinterrads, erfolgen. Gemäß der Ausführungsform kann das Regeln der ersten elektrischen Maschine, um das Übersetzungsverhältnis in dem Bereich zu halten, in Abhängigkeit von der erfassten Drehzahl des Rads erfolgen. Die weiteren Schritte des Regelns der ersten elektrischen Maschine können alternativ oder zusätzlich in Abhängigkeit von der erfassten Drehzahl des Rads erfolgen. Bei einer kleineren erfassten Drehzahl des Rads kann ein kleineres Übersetzungsverhältnis erzeugt werden, und bei einer größeren erfassten Drehzahl des Rads kann ein größeres Übersetzungsverhältnis erzeugt werden. Ändert sich während des Regelns, um das Übersetzungsverhältnis in dem Bereich zu halten, die Drehzahl des Rads des Fahrzeugs nicht, kann das Übersetzungsverhältnis konstant gehalten werden. Ändert sich die Drehzahl des Rads des Fahrzeugs, beispielsweise aufgrund von Reibung und damit Geschwindigkeitsverlust des Fahrzeugs, kann das Regeln ein leichtes Verringern der Drehzahl der ersten elektrischen Maschine zum Verringern des Übersetzungsverhältnisses umfassen.

Mit einem solchen Verfahren kann auf eine geänderte Fahrgeschwindigkeit des Fahrzeugs im Schritt des Regelns, um das Übersetzungsverhältnis in dem Bereich zu halten, reagiert werden. Während dieses Regelns, in einer Phase des Gleitens des Fahrzeugs ohne Antrieb durch den Fahrer, kann somit das Übersetzungsverhältnis an eine geänderte Drehzahl des Rads und damit an eine geänderte Geschwindigkeit des Fahrzeugs angepasst werden. Erfolgt in diesem Schritt des Regelns ein Pedalieren durch den Fahrer, kann ein angepasstes Übersetzungsverhältnis vorliegen, so dass ein für den Fahrer angenehmes Übersetzungsverhältnis zum Pedalieren vorliegt.

Gemäß einer weiteren Ausführungsform kann der vorbestimmte zeitliche Verlauf für das Regeln der ersten elektrischen Maschine, um das Übersetzungsverhältnis zu verringern, einen linearen zeitlichen Verlauf der Drehzahl der ersten elektrischen Maschine umfassen. Dieser lineare Verlauf kann rampenförmig sein. Alternativ kann ein anderer funktionaler Verlauf, beispielsweise ein parabelförmiger Verlauf, der Drehzahl möglich sein. Der lineare zeitliche Verlauf kann in Abhängigkeit von einer Zeitdauer bestimmbar sein, während welcher das Übersetzungsverhältnis bis zu einem minimalen Übersetzungsverhältnis verringert werden soll. Des Weiteren kann der lineare zeitliche Verlauf abhängig sein von dem Wert des minimalen Übersetzungsverhältnisses und alternativ oder zusätzlich von dem Ausgangswert des Übersetzungsverhältnisses, welches zu Beginn des Regelns zum Verringern des Übersetzungsverhältnisses vorlag.

Mittels eines solchen Verfahrens kann das Übersetzungsverhältnis stetig verringert werden, wobei ein einfacher zeitlicher Zusammenhang das Verringern bestimmen kann. Je länger der Fahrer mit dem erneuten Pedalieren im Schritt des Regelns zum Verringern des Übersetzungsverhältnisses wartet, desto geringer ist das Übersetzungsverhältnis, welches anliegt, wenn der Fahrer wieder anfängt zu pedalieren. Dies kann im Umkehrschluss ebenfalls dazu führen, dass es länger dauert, bis wieder das vorbestimmte Übersetzungsverhältnis am Überlagerungsgetriebe erzeugt ist. Dies kann einen Tradeoff zwischen einem Energiesparen und einer für das Pedalieren optimalen Übersetzung und einer verstrichenen Zeit, bis diese vorbestimmte Übersetzung wieder am Überlagerungsgetriebe eingestellt ist, darstellen.

Gemäß einer weiteren Ausführungsform kann die Antriebseinrichtung ferner eingerichtet sein, Antriebskraft einer zweiten elektrischen Maschine über das Überlagerungsgetriebe auf das Abtriebsrad zu übertragen. Die zweite elektrische Maschine kann mit dem Energiespeicher des Fahrzeugs verbunden sein und von diesem mit elektrischer Energie zum Betrieb als Elektromotor versorgbar sein. Die zweite elektrische Maschine kann mit dem Überlagerungsgetriebe gekoppelt sein. Beispielsweise kann ein Rotor der zweiten elektrischen Maschine drehfest mit einem Teil des Überlagerungsgetriebes gekoppelt oder verbunden sein. Ein Stator der zweiten elektrischen Maschine kann drehfest mit dem Gehäuse der Antriebseinrichtung verbunden sein. Die zweite elektrische Maschine kann eine elektrische Antriebsmaschine zum Antreiben des Fahrzeugs sein. Das Steuergerät zum Ausführen des Verfahrens kann die zweite elektrische Maschine steuern. Falls bestimmt wird, dass Rotation der Kurbelwelle zum Antreiben des Fahrzeugs nicht mehr vorliegt, kann ein Regeln der zweiten elektrischen Maschine für maximal die vorbestimmte Zeitdauer erfolgen, um einer Reibung entgegenzuwirken. Es kann der Reibung, welcher der Antriebskraft zum Antreiben des Fahrzeugs entgegenwirkt, so entgegengewirkt werden, dass die Antriebseinrichtung antriebsfrei ist und der Reibung zumindest zu einem bestimmten Wert entgegengewirkt wird. Die Antriebseinrichtung kann antriebsfrei sein, wenn keine Antriebskraft auf das angetriebene Rad des Fahrzeugs übertragen wird. Der bestimmte Wert kann einen minimalen Wert einer Kraft darstellen, welche aufgewendet wird, um der Reibung, welche der Antriebskraft zum Antreiben des Fahrzeugs entgegenwirkt, entgegenzuwirken. Dies kann ein absoluter Wert der Kraft sein, alternativ ein relativer Wert, wie beispielsweise 90 bis 100% der Reibung, welcher der Antriebskraft zum Antreiben des Fahrzeugs entgegenwirkt. Die Reibung, welcher der Antriebskraft zum Antreiben des Fahrzeugs entgegenwirkt, kann beispielsweise Reibung in Lagern der Antriebseinrichtung, oder Reibung einer Kette oder eines Riemens zwischen der Antriebseinrichtung und dem angetriebenen Rad umfassen. Das Regeln für die vorbestimmte Zeitdauer kann dabei mit einem trägen PID-Regler erfolgen. Beispielsweise kann beim Regeln der zweiten elektrischen Maschine für maximal die vorbestimmte Zeitdauer ein Drehmoment geregelt werden. Alternativ kann eine Drehzahl geregelt werden, wobei mittels des trägen Reglers ein Aufschaukeln mit dem Regler zum Regeln der Drehzahl der ersten elektrischen Maschine, welche mit der zweiten elektrischen Maschine mittels des Überlagerungsgetriebes gekoppelt ist, vermieden werden kann. Falls bis zum Verstreichen der vorbestimmten Zeitdauer fortgesetzt bestimmt wird, dass keine Rotation der Kurbelwelle zum Antreiben des Fahrzeugs vorliegt, kann ein Regeln der zweiten elektrischen Maschine erfolgen, um der Reibung höchstens bis zu dem bestimmten Wert entgegenzuwirken. Beispielsweise kann der Reibung zu maximal 90% entgegengewirkt werden. Beispielsweise kann im Schritt des Regelns, um der Reibung höchstens bis zu dem bestimmten Wert entgegenzuwirken, ein Verringern der Drehzahl der zweiten elektrischen Maschine umfasst sein, um Energie zu sparen, mit welcher die zweite elektrische Maschine betrieben wird. Das Regeln, um der Reibung höchstens bis zu dem bestimmten entgegenzuwirken, kann basierend auf einem vorbestimmten zeitlichen Verlauf erfolgen und die Drehzahl der zweiten elektrischen Maschine gemäß einem linearen zeitlichen Verlauf verringern. Somit kann die Drehzahl der zweiten elektrischen Maschine rampenförmig verringert werden. Alternativ ist ein anderer zeitlicher Verlauf der Drehzahl der zweiten elektrischen Maschine, beispielsweise ein parabelförmiger Verlauf, denkbar.

Mittels eines solchen Verfahrens kann, falls keine Rotation der Kurbelwelle zum Antreiben des Fahrzeugs vorliegt, sichergestellt werden, dass kein Vortrieb durch die zweite elektrische Maschine erfolgt. Gleichzeitig kann für die vorbestimmte Zeitdauer Reibungsverlust in der Antriebseinrichtung und in Komponenten zwischen Antriebseinrichtung und dem angetriebenen Rad vermieden werden, indem diese Reibung bis zu dem bestimmten Wert entgegengewirkt werden kann. Nach der vorbestimmten Zeitdauer kann die zweite elektrische Maschine so geregelt werden, dass die Drehzahl der zweiten elektrischen Maschine verringert wird und Energie gespart werden kann.

Gemäß einer weiteren Ausführungsform kann ein Regeln der zweiten elektrischen Maschine erfolgen, um Antriebskraft von der zweiten elektrischen Maschine über das Überlagerungsgetriebe auf das Abtriebsrad zum Antreiben des Fahrzeugs zu übertragen. Dies kann erfolgen, falls bestimmt wird, dass eine Rotation der Kurbelwelle zum Antreiben des Fahrzeugs vorliegt. Das Regeln kann erfolgen, falls Rotation der Kurbelwelle zum Antreiben des Fahrzeugs wieder vorliegt, nachdem keine Rotation der Kurbelwelle zum Antreiben des Fahrzeugs vorlag. Das Regeln kann erfolgen, falls nach Verstreichen der vorbestimmten Zeitdauer, in welcher fortgesetzt bestimmt wurde, dass keine Rotation der Kurbelwelle zum Antreiben des Fahrzeugs vorliegt, bestimmt wird, dass eine Rotation der Kurbelwelle zum Antreiben des Fahrzeugs vorliegt. Dabei kann die Drehzahl der zweiten elektrischen Maschine rampenförmig erhöht werden bis zu einer maximalen Drehzahl, um das Antreiben des Fahrzeugs mit einer vorbestimmbaren Antriebskraft umzusetzen.

Das Verfahren kann somit auf Fahrzeuge mit Antriebseinrichtung und einem Hilfsmotor übertragen und angewendet werden, wobei der Hilfsmotor, also die zweite elektrische Maschine, Antriebskraft zum Antreiben des Fahrzeugs über das Überlagerungsgetriebe auf das Abtriebsrad aufbringt, falls der Fahrer mit dem Pedalieren wieder beginnt.

Gemäß einer weiteren Ausführungsform kann Antriebskraft zum Antreiben des Fahrzeugs vom Abtriebsrad über einen Freilauf auf ein angetriebenes Rad übertragbar sein. Der Freilauf kann ein Hinterradfreilauf sein, wobei das angetriebene Rad ein angetriebenes Hinterrad sein kann. Durch das Regeln der zweiten elektrischen Maschine, um der Reibung zumindest zu dem bestimmten Wert entgegenzuwirken, kann der Freilauf synchron bleiben. Somit kann die zweite elektrische Maschine genau so viel Antriebskraft bereitstellen, dass der Reibung, welche der Antriebskraft zum Antreiben des Fahrzeugs entgegenwirkt, so entgegengewirkt werden kann, dass diese gerade so aufgehoben wird. In dem Schritt des Regelns der zweiten elektrischen Maschine, um der Reibung höchstens bis zu dem bestimmten Wert entgegenzuwirken, kann hingegen ein Abheben des Freilaufs erfolgen.

Mit einem solchen Verfahren kann ein Fahrverhalten verbessert werden, indem durch das Regeln der Freilauf synchron bleibt und somit kein Zeitverlust entsteht bis der Freilauf wieder greift, wenn der Fahrer mit dem Pedalieren erneut beginnt.

Gemäß einer weiteren Ausführungsform kann das Regeln der zweiten elektrischen Maschine, um der Reibung zumindest zu dem bestimmten Wert entgegenzuwirken, ein Regeln einer Drehzahl der zweiten elektrischen Maschine sein. Das Regeln der zweiten elektrischen Maschine, um der Reibung bis zu dem bestimmten Wert entgegenzuwirken, kann ein Regeln der Drehzahl der zweiten elektrischen Maschine sein. Das Regeln der zweiten elektrischen Maschine, um Antriebskraft von der zweiten elektrischen Maschine auf das Abtriebsrad zum Antreiben des Fahrzeugs zu übertragen, kann ein Regeln eines Drehmoments der zweiten elektrischen Maschine sein. Das Regeln der zweiten elektrischen Maschine, sowohl um der Reibung zumindest zu dem bestimmten Wert und bis zu dem bestimmten Wert entgegenzuwirken, kann in Abhängigkeit von der erfassten Drehzahl des Rads erfolgen. Die Schritte des Regelns können in Abhängigkeit von einer erfassten Drehzahl des angetriebenen Rads erfolgen. Somit kann für jeden Schritt des Regelns der Drehzahl der zweiten elektrischen Maschine eine Zieldrehzahl über einen Zusammenhang nach einem Übersetzungsverhältnis zwischen der zweiten elektrischen Maschine und dem Rad und in Abhängigkeit von der erfassten Drehzahl des Rads bestimmt werden.

Das Verfahren kann somit eingesetzt werden, um auf eine verringerte Fahrgeschwindigkeit des Fahrzeugs reagieren zu können und die Drehzahl der zweiten elektrischen Maschine angepasst daran Regeln zu können. Somit kann sichergestellt werden, dass der Freilauf beispielsweise synchron bleibt oder leicht abhebt, wobei eine geringe Differenzdrehzahl anliegen kann. Somit kann sowohl der Schritt des Regelns, in welchem zumindest zu dem bestimmten Wert der Reibung entgegengewirkt werden kann, als auch der Schritt des Regelns, in welchem bis zu dem bestimmten Wert der Reibung entgegengewirkt werden kann, angepasst an die Fahrgeschwindigkeit erfolgen.

Gemäß einer weiteren Ausführungsform kann die erste elektrische Maschine bis zu einem ersten maximalen Drehmoment geregelt werden, um eine Sicherheitsfunktion der ersten elektrischen Maschine umzusetzen. Durch das Regeln bis zu einem ersten maximalen Drehmoment kann beispielsweise verhindert werden, dass ein maximaler Wert einer Antriebskraft, welche beispielsweise über eine Kette an das angetriebene Rad übertragbar ist, überschritten werden kann. Dazu kann das erste maximale Drehmoment parametrisierbar auf einen Wert sein, so dass eine gewünschte maximale Antriebskraft erzeugt werden kann. Damit kann beispielsweise vermieden werden, dass die erste elektrische Maschine zu viel Drehmoment in das Überlagerungsgetriebe übertragen kann. Somit kann die Sicherheitsfunktion der ersten elektrischen Maschine beispielsweise ein Hineinziehen eines Fremdkörpers in die Kette mit mehr als der maximalen Antriebskraft vermeiden. So kann ein Unfallschutz implementiert werden, und gleichzeitig ein Schutz von externen Teilen, wie einer Hose, so dass das Regeln nur bis zum ersten maximalen Drehmoment erfolgt.

Gemäß einer weiteren Ausführungsform kann die zweite elektrische Maschine bis zu einem zweiten maximalen Drehmoment geregelt werden, um eine Sicherheitsfunktion der zweiten elektrischen Maschine umzusetzen. Dies kann für eine ähnliche Funktion wie die Sicherheitsfunktion der ersten elektrischen Maschine erfolgen. Das erste und das zweite maximale Drehmoment können unterschiedlich oder gleich sein. Somit kann auch die zweite elektrische Maschine eine Antriebskraft nur bis zu einem maximalen Wert erzeugen und auf die Kette zum Antreiben des angetriebenen Rades aufbringen.

Gemäß einer weiteren Ausführungsform kann das Regeln der ersten elektrischen Maschine, um das vorbestimmte Übersetzungsverhältnis zu erzeugen, erfolgen, falls Rotation der Kurbelwelle zum Antreiben des Fahrzeugs vorliegt, beispielsweise wenn sie wieder vorliegt. So kann das Regeln erfolgen, falls, nachdem bestimmt wurde, dass Rotation der Kurbelwelle zum Antreiben des Fahrzeugs für maximal die vorbestimmte Zeitdauer nicht mehr vorliegt, bestimmt wird, dass die Rotation zum Antreiben des Fahrzeugs wieder vorliegt. Das Regeln der zweiten elektrischen Maschine, um Antriebskraft von der zweiten elektrischen Maschine auf das Abtriebsrad zum Antreiben des Fahrzeugs zu übertragen, kann dann ebenfalls erfolgen. Damit können diese Schritte des Regelns bei einem erneuten Pedalieren erfolgen, bevor Drehzahlen der ersten und der zweiten elektrischen Maschine verringert werden, falls maximal die vorbestimmte Zeitdauer seit dem Einstellen des Pedalierens verstrichen ist.

Somit kann ein Verfahren bereitgestellt sein, wobei das Verfahren dem Fahrer des Fahrzeugs für die vorbestimmte Zeitdauer ermöglicht, ein Fahrverhalten zu erhalten, welches sich bezüglich der Antriebseinrichtung nicht vom Fahrverhalten unterscheidet, welches vorliegt, wenn der Fahrer pedaliert. So kann beispielsweise der Fahrer für maximal die vorbestimmte Zeitdauer das Pedalieren unterbrechen und danach bei erneutem Pedalieren sofort wieder das vorbestimmte Übersetzungsverhältnis und das Antreiben des Fahrzeugs mittels Antriebskraft von der zweiten elektrischen Maschine erfahren.

Gemäß einer weiteren Ausführungsform kann das Regeln der ersten elektrischen Maschine und das Regeln der zweiten elektrischen Maschine nur erfolgen, wenn die erfasste Drehzahl des Rads größer als eine Mindestdrehzahl des Rads ist. Insbesondere können die Schritte, wenn kein Pedalieren vorliegt, also wenn keine Rotation der Kurbelwelle zum Antreiben des Fahrzeugs vorliegt, nur erfolgen, wenn die erfasste Drehzahl des Rads, beispielsweise des angetriebenen Hinterrads, größer als eine Mindestdrehzahl ist.

Somit kann das Verfahren beschränkbar sein auf Situationen, in welchen das Fahrzeug eine Mindestgeschwindigkeit aufweist. Bei kleineren Geschwindigkeiten kann beispielsweise das Regeln der ersten elektrischen Maschine so erfolgen, dass beim Bestimmen, dass keine Rotation der Kurbelwelle mehr zum Antreiben des Fahrzeugs vorliegt, sofort das minimale Übersetzungsverhältnis erzeugt wird. In einem Fall, in dem das Fahrzeug eine geringe Fahrgeschwindigkeit aufweist, kann der Unterschied zwischen dem vorbestimmten Übersetzungsverhältnis beim Pedalieren und dem minimalen Übersetzungsverhältnis gering sein, und damit kann der Unterschied beim Pedalieren für den Fahrer in beiden Situationen klein sein. Hier kann der Effekt des Energiesparens ausgeweitet werden und auf ein Verringern der Drehzahl gemäß einem zeitlichen Verlauf verzichtet werden.

Gemäß einer weiteren Ausführungsform kann das Verfahren ferner ein Erfassen einer Nutzereingabe und ein Bestimmen der vorbestimmten Zeitdauer in Abhängigkeit von der erfassten Nutzereingabe aufweisen. Die Nutzereingabe kann hinsichtlich Fahrmodi des Fahrzeugs erfolgen. Fahrmodi können beispielsweise einen Ecomodus, einen Sportmodus oder weitere Modi umfassen. Bei einem Ecomodus kann die Zeitdauer beispielsweise kürzer bestimmt werden als bei einem Sportmodus. Bei kürzerer Zeitdauer kann die Rampe, um die Drehzahlen der ersten und alternativ oder zusätzlich der zweiten elektrischen Maschine zu verringern, steiler sein als bei einer längeren vorbestimmten Zeitdauer.

Das Verfahren kann somit in Abhängigkeit einer Nutzereingabe hin zu mehr Energieeffizienz oder hin zu einem optimaleren Fahrverhalten durch den Nutzer beeinflussbar sein.

Gemäß einer weiteren Ausführungsform können die erste elektrische Maschine und die zweite elektrische Maschine mit elektrischer Energie eines Energiespeichers versorgt werden. Der Energiespeicher kann eine Batterie des Fahrzeugs sein. Das Regeln der ersten elektrischen Maschine und das Regeln der zweiten elektrischen Maschine können nur erfolgen, wenn der Energiespeicher zumindest einen bestimmten Ladezustand aufweist, beispielsweise 20% der maximalen Ladekapazität.

Gemäß dem Verfahren kann das Regeln der ersten und zweiten elektrischen Maschine nur dann erfolgen, wenn genügend gespeicherte Energie im Energiespeicher vorhanden ist, um das komplette Ausführen des Verfahrens gewährleisten zu können. Somit kann sichergestellt werden, dass zumindest für das Regeln für die vorbestimmte Zeitdauer und für das Regeln zum Verringern des Übersetzungsverhältnisses und der Drehzahl der zweiten elektrischen Maschine genügend Energie vorhanden ist, um diese Schritte ausführen zu können.

Gemäß einer weiteren Ausführungsform kann die Antriebseinrichtung einen Freilauf aufweisen. Der Freilauf kann beispielsweise ein Sperrklinkenfreilauf sein. Der Freilauf kann von der Antriebseinrichtung aufgewiesen sein, um Kraftübertragung in Richtung der Kurbelwelle in zumindest eine Drehrichtung zu verhindern. Beispielsweise kann Kraft von der ersten elektrischen Maschine in einer ersten Drehrichtung nicht an die Kurbelwelle übertragen werden, wohingegen Kraft in eine zweite, der ersten entgegengesetzte Drehrichtung, übertragbar ist. Alternativ oder zusätzlich kann keine Kraft in zumindest eine Drehrichtung von der zweiten elektrischen Maschine an die Kurbelwelle übertragen werden. Alternativ oder zusätzlich kann keine Kraft in zumindest eine Drehrichtung vom Abtriebsrad an die Kurbelwelle übertragen werden. Das Regeln der ersten elektrischen Maschine und das Regeln der zweiten elektrischen Maschine können dabei in Abhängigkeit von einer relativen Position des Freilaufs im Überlagerungsgetriebe erfolgen. Verschiedene Schritte des Regelns können dabei ein Anpassen der Drehzahlen der ersten und alternativ oder zusätzlich der zweiten elektrischen Maschine umfassen. Dabei kann in Abhängigkeit von der relativen Position des Freilaufs es notwendig sein, verschiedene Drehzahlsprünge zu verschiedenen Zeiten anzusteuern.

Ein zweiter Aspekt der vorliegenden Erfindung betrifft ein Steuergerät, welches eingerichtet ist, ein Verfahren nach einer Ausführungsform des ersten Aspekts der Erfindung auszuführen. Das Steuergerät kann eingerichtet sein, um die Antriebseinrichtung zu steuern. Das Steuergerät kann Eingabeschnittstellen zum Empfangen von Daten und Ausgabeschnittstellen zum Senden von Daten aufweisen. Beispielsweise kann Information zur Rotation der Kurbelwelle empfangen werden, wobei Information zum Regeln der Drehzahl der ersten und der zweiten elektrischen Maschine gesendet werden kann.

Ein dritter Aspekt der vorliegenden Erfindung betrifft ein Fahrrad mit mindestens zwei Rädern, einer Antriebseinrichtung und einem Steuergerät nach dem zweiten Aspekt der vorliegenden Erfindung. Das Fahrrad kann ein Pedelec mit einem Energiespeicher sein. Der Energiespeicher kann eine Batterie, beispielsweise eine Lithium-Ionen-Batterie, sein. Das Fahrrad kann eine Nutzerschnittstelle, beispielsweise ein Display, aufweisen.

### Kurze Beschreibung der Figuren

- Fig. 1a: ist eine schematische Ansicht einer Antriebseinrichtung für ein muskelkraftbetriebenes Fahrzeug gemäß einer ersten Ausführungsform eines Fahrrads als Fahrzeug;
- Fig. 1b: zeigt einen zeitlichen Verlauf von Drehzahlen unterschiedlicher Komponenten der Antriebseinrichtung nach Fig. 1a;
- Fig. 2a: ist eine schematische Ansicht einer Antriebseinrichtung für ein muskelkraftbetriebenes Fahrzeug gemäß einer zweiten Ausführungsform eines Fahrrads als Fahrzeug;
- Fig. 2b: zeigt einen zeitlichen Verlauf Drehzahlen unterschiedlicher Komponenten der Antriebseinrichtung nach Fig. 2a;
- Fig. 3: ist eine schematische Ansicht einer Antriebseinrichtung für ein muskelkraftbetriebenes Fahrzeug gemäß einer dritten Ausführungsform eines Fahrrads als Fahrzeug;
- Fig. 4a: ist eine schematische Ansicht einer Antriebseinrichtung für ein muskelkraftbetriebenes Fahrzeug gemäß einer vierten Ausführungsform eines Fahrrads als Fahrzeug;
- Fig. 4b: zeigt einen zeitlichen Verlauf von Drehzahlen unterschiedlicher Komponenten der Antriebseinrichtung nach Fig. 4a;
- Fig. 5: zeigt schematisch Schritte eines Verfahrens zur Steuerung einer Antriebseinrichtung für ein muskelkraftbetriebenes Fahrzeug gemäß einer Ausführungsform.

### Detaillierte Beschreibung von Ausführungsformen

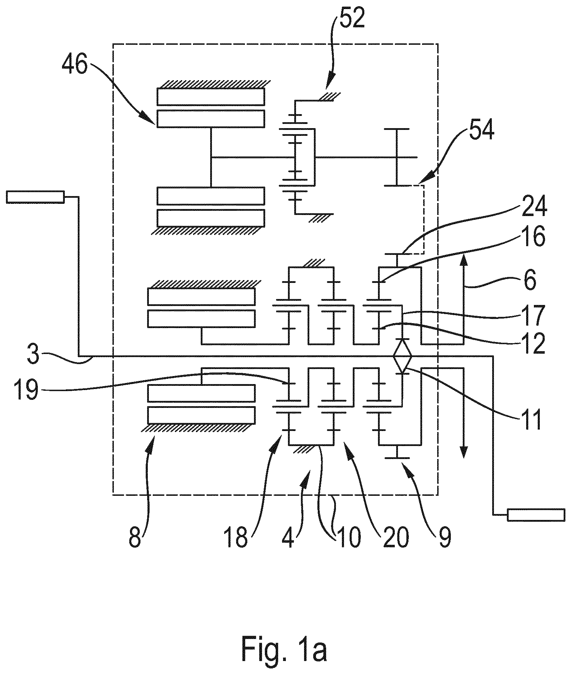

Fig. 1a zeigt in einer schematischen Ansicht eine Antriebseinrichtung für ein muskelkraftbetriebenes Fahrzeug gemäß einer ersten Ausführungsform, wobei das Fahrzeug ein Fahrrad ist. Die Antriebseinrichtung weist ein Überlagerungsgetriebe 4, eine erste elektrische Maschine 8, eine zweite elektrische Maschine 46, ein Abtriebsrad 6 und eine Kurbelwelle 3 auf. An der Kurbelwelle 3 sind Kurbelarme mit Pedalen zum Pedalieren für einen Fahrer des Fahrzeugs angebracht. Die Kurbelwelle 3 ist über einen Freilauf 11 mit dem Überlagerungsgetriebe 4 koppelbar. Das Überlagerungsgetriebe 4 weist einen ersten Planetensatz 9, einen zweiten Planetensatz 18 und einen dritten Planetensatz 20 auf. Die erste elektrische Maschine 8 ist über den zweiten Planetensatz 18 und ferner über den dritten Planetensatz 20 mit dem ersten Planetensatz 9 gekoppelt. Dabei ist ein Rotor der ersten elektrischen Maschine 8 mit einem Sonnenrad 19 des zweiten Planetensatzes 18 gekoppelt. Ein Stator der ersten elektrischen Maschine 8 ist mit einem Gehäuse 10 der Antriebseinrichtung drehfest verbunden. Der dritte Planetensatz 20 ist dabei mit einem Sonnenrad 12 des ersten Planetensatzes 9 gekoppelt. Die Kurbelwelle 3 ist über den Freilauf 11 mit einem Planetenträger 17 des ersten Planetensatzes 9 koppelbar. Ein Hohlrad 16 des ersten Planetensatzes 9 ist mit dem Abtriebsrad 6 gekoppelt. Teile der Antriebseinrichtung sind mit dem Gehäuse 10 drehfest verbunden.

Der Freilauf 11 bewirkt, dass bei einer Drehung des der Kurbelwelle 3 in einer ersten Richtung Kraft von der Kurbelwelle 3 auf den Planetenträger 17 übertragen wird, während bei einer Drehung der Kurbelwelle 3 in der entgegengesetzten Richtung keine Kraft von der Kurbelwelle 3 auf den Planetenträger 17 übertragen wird.

Nicht gezeigt in Fig. 1a sind eine Energiespeichereinrichtung und ein Steuergerät. Das Steuergerät ist dabei eingerichtet, Drehzahl und Drehrichtung der elektrischen Maschine 8 zu steuern, so dass die entsprechende Drehung in das Überlagerungsgetriebe 4 eingeleitet werden kann. Das Steuergerät ist ferner eingerichtet, Schritte eines Verfahrens zum Steuern der Antriebseinrichtung, wie im Folgenden beschrieben, auszuführen. Die elektrische Maschine 8 wird mit elektrischer Energie, gespeichert in der Energiespeichereinrichtung, betrieben.

Eine zweite elektrische Maschine 46 der Antriebseinrichtung kann über eine Steuerungseinrichtung und unter Verwendung von elektrischer Energie der Energiespeichereinrichtung angetrieben werden. Eine Antriebskraft der zweiten elektrischen Maschine 46 kann auf das Abtriebsrad 6 aufgebracht werden. Somit kann die durch den Fahrer des Fahrrads über die Kurbelwelle 3 aufgebrachte Muskelkraft durch die Antriebskraft der zweiten elektrischen Maschine 46 ergänzt werden. Die Antriebseinrichtung stellt somit einen elektrisch unterstützten Antrieb dar, wie er bei Pedelecs oder E-Bikes eingesetzt wird. Das Überlagerungsgetriebe 4 und die elektrische Maschine 8 sind vorgesehen, ein variables Übersetzungsverhältnis am Überlagerungsgetriebe 4 zwischen der Kurbelwelle 3 und dem Abtriebsrad 6 einzustellen.

Die zweite elektrische Maschine 46 ist über einen vierten Planetensatz 52 und über einen Stirnradsatz 54 mit dem Überlagerungsgetriebe 4 gekoppelt. Dabei ist der Stirnradsatz 54 mit einer Stirnradstufe 24 gekoppelt. Die Stirnradstufe 24 ist mit dem Abtriebsrad 6 und dem Hohlrad 16 des ersten Planetensatzes 9 gekoppelt.

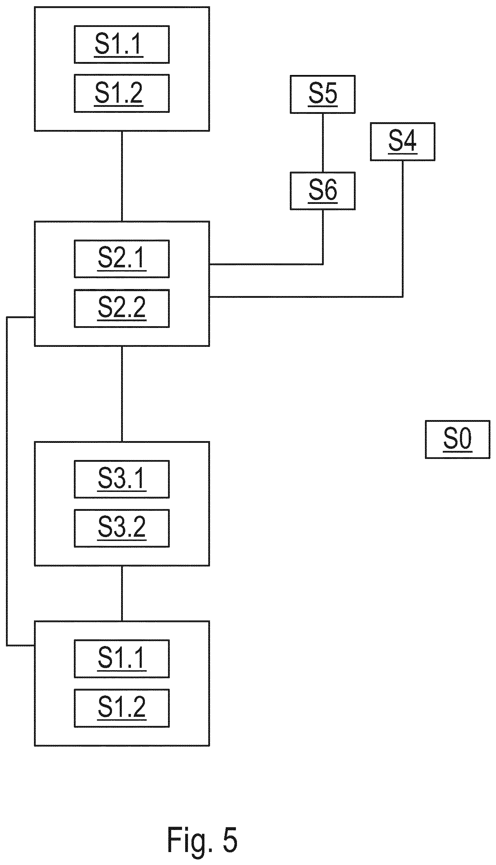

Fig. 5 zeigt schematisch Schritte eines Verfahrens zur Steuerung einer Antriebseinrichtung für ein muskelkraftbetriebenes Fahrzeug gemäß einer Ausführungsform. Zunächst erfolgt ein fortgesetztes Bestimmen S0, ob eine Rotation der Kurbelwelle 3 zum Antreiben des Fahrzeugs vorliegt. Das fortgesetzte Bestimmen S0 erfolgt in Abhängigkeit von mittels Sensoren an der Kurbelwelle 3 erfasster Information und das Bestimmen wird durch das Steuergerät ausgeführt. Diese Information wird an das Steuergerät gesendet, welches eingerichtet ist, das Verfahren zur Steuerung der Antriebseinrichtung auszuführen. Das Steuergerät ist ebenfalls eingerichtet, die folgenden Schritte des Regelns der ersten elektrischen Maschine 8 und der zweiten elektrischen Maschine 46 auszuführen. So erfolgt in einem Schritt eines Regelns S1.1 ein Regeln einer Drehzahl n der ersten elektrischen Maschine 8, um ein vorbestimmtes Übersetzungsverhältnis am Überlagerungsgetriebe 4 zu erzeugen. Dies erfolgt, falls bestimmt wird, dass eine Rotation der Kurbelwelle 3 zum Antreiben des Fahrzeugs vorliegt. Ein Übersetzungsverhältnis wird am Überlagerungsgetriebe 4 durch Regeln der Drehzahl n der ersten elektrischen Maschine 8 erzeugt, indem eine bestimmte Drehzahl n der ersten elektrischen Maschine 8 ein bestimmtes Übersetzungsverhältnis am Überlagerungsgetriebe 4 einstellt. So liegt ein größeres Übersetzungsverhältnis am Überlagerungsgetriebe 4 zwischen Kurbelwelle 3 und Abtriebsrad 6 vor, wenn die Drehzahl n eines Sonnenrads 19 des zweiten Planetensatzes 18, welches mit einem Ausgangselement der ersten elektrischen Maschine 8 gekoppelt ist, größer ist. Das vorbestimmte Übersetzungsverhältnis ist dabei über einen in einem Speicher des Steuergeräts gespeicherten Zusammenhang vorbestimmt. So ist das Übersetzungsverhältnis von einer Nutzereingabe und einer aktuellen Fahrgeschwindigkeit abhängig. So wird das vorbestimmte Übersetzungsverhältnis am Überlagerungsgetriebe 4 beispielsweise so eingestellt, dass der Fahrer mit einer Trittfrequenz zwischen 60 und 90 Umdrehungen pro Minute angepasst an die Fahrgeschwindigkeit pedalieren kann, um das Fahrzeug anzutreiben.

Der Freilauf 11 ist vorgesehen, um bei einer Tretunterbrechung durch den Fahrer dafür zu sorgen, dass keine störende Drehmomentrückwirkung auf die Kurbelwelle 3 vom Überlagerungsgetriebe 4 erfolgt. Ferner ist ein weiterer nicht gezeigter Freilauf zwischen dem Abtriebsrad 6 und einem angetriebenen Rad des Fahrzeugs vorgesehen, welcher eine Kraftübertragung in zumindest eine Richtung verhindert. Dieser nicht gezeigte Freilauf, auch im Folgenden genannt Hinterradfreilauf bei einem angetriebenen Hinterrad des Fahrzeugs, sorgt dafür, dass, wenn sich das angetriebene Hinterrad schneller als ein das angetriebene Hinterrad antreibende Element, beispielsweise ein Ritzel, angetrieben durch eine Kette über das Abtriebsrad 6, dreht, der Hinterradfreilauf abhebt und somit keine Kraftrückwirkung auf das Abtriebsrad 6 der Antriebseinrichtung wirkt.

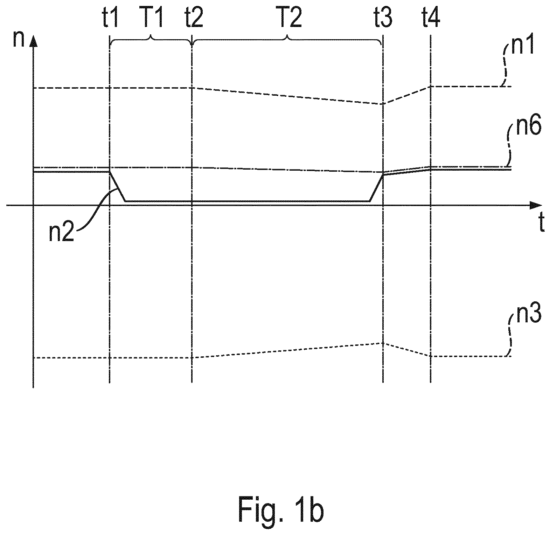

Fig. 1b zeigt einen beispielhaften Drehzahlverlauf der Drehzahl n von verschiedenen Komponenten der Antriebseinrichtung gegen die Zeit t. Der beispielhafte Drehzahlverlauf, gezeigt in Fig. 1b, bezieht sich dabei auf eine erste Ausführungsform des Fahrrads mit der Antriebseinrichtung aus Fig. 1a. Bis zu einem Zeitpunkt t1 erfolgt ein Pedalieren durch den Fahrer. Zum Zeitpunkt t1 erfolgt ein Bestimmen S0, dass keine Rotation der Kurbelwelle zum Antreiben des Fahrzeugs mehr vorliegt. Sodann erfolgt ein Regeln S2.1 der Drehzahl der ersten elektrischen Maschine 8 für maximal eine vorbestimmte Zeitdauer T1, um das Übersetzungsverhältnis in einem Bereich des Übersetzungsverhältnisses zu halten, das am Überlagerungsgetriebe 4 bei dem Bestimmen S0 eingestellt war, dass keine Rotation der Kurbelwelle 3 mehr zum Antreiben des Fahrzeugs vorliegt. Während der vorbestimmten Zeitdauer T1 verändert sich, unter Annahme von zu vernachlässigenden Reibungsverlusten, eine Drehzahl n1 des Abtriebsrads 6 nicht und bleibt konstant. Dies erfolgt durch Regeln S2.2 der zweiten elektrischen Maschine 46, um einer Reibung, welche der Antriebskraft zum Antreiben des Fahrzeugs entgegenwirkt, so entgegenzuwirken, dass der Hinterradfreilauf synchron bleibt. Dies geschieht dadurch, dass unter der Annahme eines verlustfreien Fortbewegens die Drehzahl n1 des Abtriebsrads 6 konstant gehalten wird.

Eine Drehzahl n3 des Sonnenrads 12 des ersten Planetensatzes 9 bleibt zwischen dem Zeitpunkt t1 und einem Zeitpunkt t2 nach der vorbestimmten Zeitdauer T1 konstant. Dies erfolgt durch Halten der Drehzahl des Sonnenrads 19 des zweiten Planetensatzes 18 auf einem konstanten Wert durch Regeln S2.1 der ersten elektrischen Maschine 8. Durch Halten der Drehzahl n3 auf einem konstanten Niveau bleibt das Übersetzungsverhältnis am Überlagerungsgetriebe 4 zwischen der Kurbelwelle 3 und dem Abtriebsrad 6 im Bereich des Übersetzungsverhältnisses, welches am Überlagerungsgetriebe 4 eingestellt war, als keine Rotation der Kurbelwelle 3 zum Antreiben des Fahrzeugs mehr vorlag. Im Fall von Reibungsverlusten erfolgt eine Anpassung der Drehzahl n3, so dass das Übersetzungsverhältnis einer kleiner werdenden Fahrgeschwindigkeit des Fahrzeugs angepasst wird. Dies wäre in Fig. 1b mit einer Verringerung der Drehzahl n3 mit einer kleinen Steigung zwischen t1 und t2 zu erkennen. Es ist dabei zu beachten, dass aufgrund der Übersetzung des Überlagerungsgetriebes 4 die Drehzahl n3 negativ ist. Mit einer angepassten positiven Übersetzung ist die vorhergehenden und nachfolgende Beschreibung auch für einen positiven Verlauf der Drehzahl n3 des Sonnenrads 19 des zweiten Planetensatzes 18 gültig.

Zum Zeitpunkt t1 verringert sich eine Drehzahl n2 der Kurbelwelle 3 durch Beenden des Pedalierens durch den Fahrer. Zwischen den Zeitpunkten t1 und t2 bleibt eine Drehzahl n6 des Planetenträgers 17 des ersten Planetensatzes 9 konstant. Der Freilauf 11 hebt ab.

Nach der vorbestimmten Zeitdauer T1 zum Zeitpunkt t2 und nachdem fortgesetzt bestimmt worden ist, dass keine Rotation der Kurbelwelle 3 zum Antreiben des Fahrzeugs vorliegt, erfolgt ein Regeln S3.1 der Drehzahl der ersten elektrischen Maschine 8, um das Übersetzungsverhältnis am Überlagerungsgetriebe 4 basierend auf einem zeitlichen Verlauf zu verringern. Dabei wird die Drehzahl n3 des Sonnenrads 12 des ersten Planetensatzes 9 verringert. Das Verringern erfolgt über einen linearen zeitlichen Verlauf zwischen dem Zeitpunkt t2 und einem Zeitpunkt t3 über eine Zeitdauer T2 zum Verringern des Übersetzungsverhältnisses am Überlagerungsgetriebe 4. Die in Fig. 1b gezeigte Drehzahl n3 ist dabei die Drehzahl, welche in einem reibungsverlustfreien Fall geregelt wird. Im Fall von Verlusten, beispielsweise Reibungsverlusten, so dass das Fahrzeug über die Zeit t an Fahrgeschwindigkeit verliert, kann das lineare Verringern mit einem größeren Gradienten erfolgen. Durch ein Regeln S3.2 wird der Reibung, welcher die Antriebskraft zum Antreiben des Fahrzeugs entgegenwirkt, höchstens bis zu einem bestimmten Wert entgegengewirkt. Dabei hebt der Hinterradfreilauf ab. Die Drehzahl n1 des Abtriebsrads 6 verringert sich. Über ein festes Übersetzungsverhältnis von viertem Planetensatz 52 und Stirnradsatz 54 zwischen der zweiten elektrischen Maschine 46 und dem Überlagerungsgetriebe 4 erfolgt dabei ein Verringern der Drehzahl der zweiten elektrischen Maschine 46.

Kurz vor dem Zeitpunkt t3 beginnt der Fahrer erneut mit dem Pedalieren, so dass ein fortgesetztes Bestimmen S0 erfolgt, dass Rotation der Kurbelwelle 3 zum Antreiben des Fahrzeugs erneut vorliegt. Die Drehzahl n2 der Kurbelwelle 3 steigt an. Die Drehzahl n3 des Sonnenrads 12 des ersten Planetensatzes 9 wird durch das Regeln S1.1 erhöht, so dass erneut das vorbestimmte Übersetzungsverhältnis am Überlagerungsgetriebe 4 erzeugt wird. Es erfolgt ein Regeln S1.2 der zweiten elektrischen Maschine 46, um Antriebskraft von der zweiten elektrischen Maschine 46 über das Überlagerungsgetriebe 4 auf das Abtriebsrad 6 zum Antreiben des Fahrzeugs zu übertragen. Damit steigt die Drehzahl n1 des Abtriebsrads 6 zwischen den Zeitpunkten t3 und t4 an. Zum Zeitpunkt t3 ist der Freilauf 11 wieder synchron und die Drehzahl n2 der Kurbelwelle 3 und die Drehzahl n6 des Planetenträgers 17 sind gleich. Zwischen den Zeitpunkten t3 und t4 steigen die Drehzahlen n1, n2, n3 und n6 an. Ab dem Zeitpunkt t4 erfolgt erneut das Pedalieren mit dem vorbestimmten Übersetzungsverhältnis wie vor dem Zeitpunkt t1.

Das Verfahren weist ferner einen Schritt S4 des Erfassens einer Drehzahl eines Rads des Fahrzeugs auf, wobei die Drehzahl des angetriebenen Hinterrads erfasst wird. Das Regeln S2.1 der ersten elektrischen Maschine 8, um das Übersetzungsverhältnis zu halten, erfolgt dabei in Abhängigkeit von der erfassten Drehzahl des Rads. Verringert sich die Drehzahl des Rads, beispielsweise aufgrund von Reibungsverlusten, wird auch das Übersetzungsverhältnis angepasst. Im Schritt des Regelns S2.1 erfolgt somit ein leichtes rampenförmiges Verringern der Drehzahl n3 des Sonnenrads 12 des ersten Planetensatzes 9, falls Reibungsverluste vorliegen. Auch das Regeln S2.2 der zweiten elektrischen Maschine 46, um den Hinterradfreilauf synchron zu halten, erfolgt in Abhängigkeit der erfassten Drehzahl des Rads. Verringert sich die Drehzahl des Rads, beispielsweise aufgrund von Reibungsverlusten, verringert sich auch die Drehzahl der zweiten elektrischen Maschine 46, so dass der Hinterradfreilauf synchron bleibt und gleichzeitig keine Kraft zum Antreiben des Fahrzeugs von der zweiten elektrischen Maschine 46 über das Überlagerungsgetriebe 4 auf das Abtriebsrad 6 und das angetriebene Rad übertragen wird.

Das Verfahren weist ferner einen Schritt eines Erfassens S5 einer Nutzereingabe auf. Die Nutzereingabe kann beispielsweise über einen Schalter am Lenker des Fahrzeugs erfolgen. Der Nutzer kann über die Nutzereingabe vorgeben, wie das Verfahren zur Steuerung der Antriebseinrichtung erfolgen soll. So kann der Fahrer beispielsweise vorgeben, dass er besonders sportlich fahren möchte. Alternativ kann der Fahrer vorgeben, dass das Fahrzeug möglichst energiesparend gefahren werden soll. In einem Schritt eines Bestimmens S6 wird die vorbestimmte Zeitdauer T1 in Abhängigkeit der erfassten Nutzereingabe bestimmt. Bei einem sportlichen Fahren wird die vorbestimmte Zeitdauer T1 länger gewählt als bei einem ressourcensparenden Fahren. Bei längerer Zeitdauer T1 wird das Übersetzungsverhältnis am Überlagerungsgetriebe 4 für einen längeren Zeitraum gehalten. Somit hat der Fahrer länger Zeit, erneut mit dem Pedalieren zu beginnen und das gleiche Übersetzungsverhältnis am Überlagerungsgetriebe 4 zu erfahren wie zu dem Zeitpunkt, als er mit dem Pedalieren aufhörte. Wird hingegen ein ressourcenschonendes Fahren vom Fahrer gewünscht, wird die vorbestimmte Zeitdauer T1 kürzer gewählt. Dadurch erfolgt schneller ein Verringern des Übersetzungsverhältnisses über ein Verringern der Drehzahl n der ersten elektrischen Maschine 8 und ein Verringern der Drehzahl n der zweiten elektrischen Maschine 46, so dass der Hinterradfreilauf abhebt. Dadurch wird besonders ressourcensparend Energie gespart, da lediglich verringerte Drehzahlen n der ersten und zweiten elektrischen Maschine 8, 46 erforderlich sind.

Die vorbestimmte Zeitdauer T1 beträgt dabei einige Sekunden. Durch das Regeln S2.1 und S2.2 der ersten und zweiten elektrischen Maschine 8, 46 wird somit das vorbestimmte Übersetzungsverhältnis am Überlagerungsgetriebe 4 gehalten und der Hinterradfreilauf synchron gehalten, so dass der Fahrer durch erneutes Pedalieren keine störende verzögernde Reaktion der Antriebseinrichtung spürt.

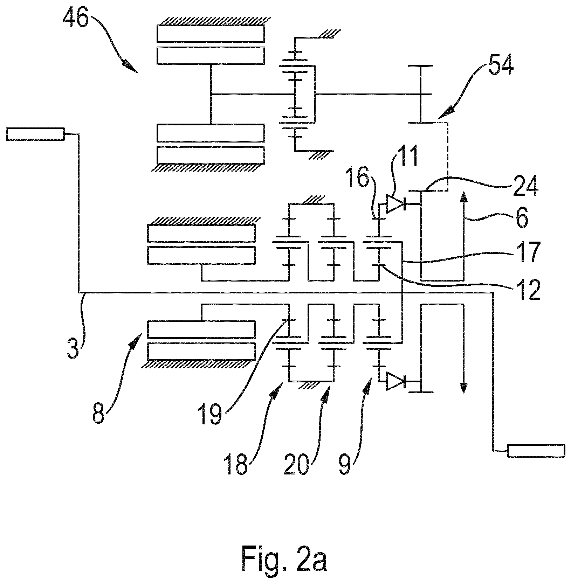

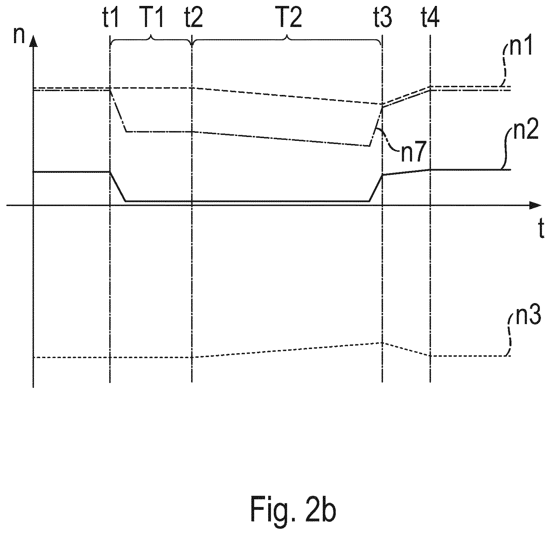

Fig. 2a zeigt eine weitere Antriebseinrichtung für ein Fahrrad gemäß einer zweiten Ausführungsform. Fig. 2b zeigt dabei die dazu passenden Verläufe von Drehzahlen n gegen Zeit t. Es wird im Folgenden lediglich auf Unterschiede zur ersten Ausführungsform eingegangen. Im Unterschied zur Antriebseinrichtung des Fahrzeugs gemäß der ersten Ausführungsform, gezeigt in Fig. 1a, ist der Freilauf 11 zwischen dem Hohlrad 16 des ersten Planetensatzes 9 und dem Abtriebsrad 6 vorgesehen. Damit wird eine Kraftübertragung in zumindest eine Drehrichtung zwischen Hohlrad 16 und Abtriebsrad 6 verhindert. Die Stirnradstufe 24 ist dabei abtriebsseitig des Freilaufs 11 angeordnet, so dass eine Kraftübertragung in beide Richtungen zwischen der zweiten elektrischen Maschine 46 und dem Abtriebsrad 6 erfolgt. Der Freilauf 11 dient ebenfalls, wie der Freilauf 11 gezeigt in Fig. 1a, dazu, bei plötzlicher Unterbrechung des Pedalierens durch den Fahrer eine störende Drehmomentrückwirkung auf die Kurbelwelle 3 aufgrund von Trägheitsmassen der Antriebseinrichtung, beispielsweise der elektrischen Maschinen 8, 46, zu verhindern.

Die Drehzahl n2 sinkt ab dem Zeitpunkt t1 aufgrund eines Stoppens des Pedalierens durch den Fahrer. Über die vorbestimmte Zeitdauer T1 wird die Drehzahl n3 gehalten, um das Übersetzungsverhältnis am Überlagerungsgetriebe 4 zu halten. Die Drehzahl n1 des Abtriebsrads 6 wird durch Regeln S2.2 der zweiten elektrischen Maschine 46 gehalten. Der Hinterradfreilauf bleibt synchron. Eine Drehzahl n7 des Hohlrads 16 des ersten Planetensatzes 9 sinkt mit der Drehzahl n2 der Kurbelwelle 3 und des Planetenträgers 17 ab. Der Freilauf 11 hebt ab. Ab dem Zeitpunkt t2 erfolgt ein Verringern der Drehzahlen n3 und n1 durch Verringern der Drehzahlen der ersten und zweiten elektrischen Maschine 8, 46, um Energie zu sparen. Gleichzeitig wird, über das Übersetzungsverhältnis am Überlagerungsgetriebe 4, die Drehzahl n7 des Hohlrads 16 des ersten Planetensatzes 9 verringert. Kurz vor dem Zeitpunkt t3 beginnt der Fahrer erneut mit dem Pedalieren. Aus dem fortgesetzten Bestimmen S0 folgt, dass Rotation der Kurbelwelle 3 zum Antreiben des Fahrzeugs vorliegt. Die Drehzahlen n2 und n7 steigen an, der Freilauf 11 greift erneut. Ab dem Zeitpunkt t3 werden die Drehzahlen n3 und n1 erhöht, um das Übersetzungsverhältnis am Überlagerungsgetriebe 4 erneut auf das vorbestimmte Übersetzungsverhältnis zu erhöhen und Antriebskraft zum Antreiben des Fahrzeugs bereitzustellen. Ab dem Zeitpunkt t4 liegt eine vergleichbare Situation wie vor dem Zeitpunkt t1 vor.

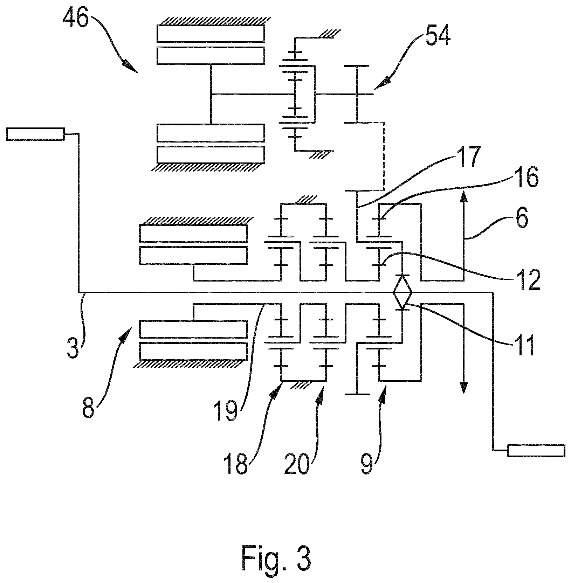

Fig. 3 zeigt schematisch eine Antriebseinrichtung für ein Fahrrad gemäß einer dritten Ausführungsform. Der Freilauf ist, ähnlich wie in der ersten Ausführungsform, gezeigt in Fig. 1a, zwischen der Kurbelwelle 3 und dem Planetenträger 17 angeordnet. Es wird im Folgenden lediglich auf Unterschiede zur ersten Ausführungsform eingegangen. Im Unterschied zur ersten Ausführungsform ist die zweite elektrische Maschine 46 über den Stirnradsatz 54 mit dem Planetenträger 17 gekoppelt. Der qualitative Drehzahlverlauf, gezeigt für die erste Ausführungsform in Fig. 1b, ist qualitativ auch für die dritte Ausführungsform aus Fig. 3 gültig. Dabei entspricht die Drehzahl n6 aus Fig. 1b, multipliziert mit einer festen Übersetzung, der Drehzahl der zweiten elektrischen Maschine 46. Ansonsten sind die Drehzahlverläufe qualitativ mit den Drehzahlverläufen der ersten Ausführungsform, gezeigt in Fig. 1b, vergleichbar.

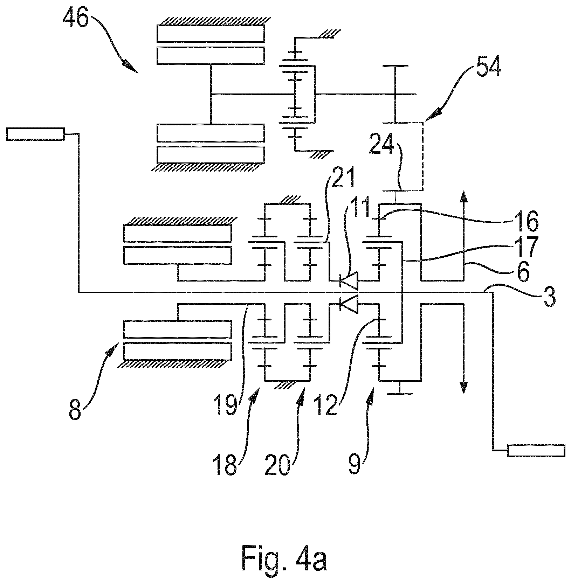

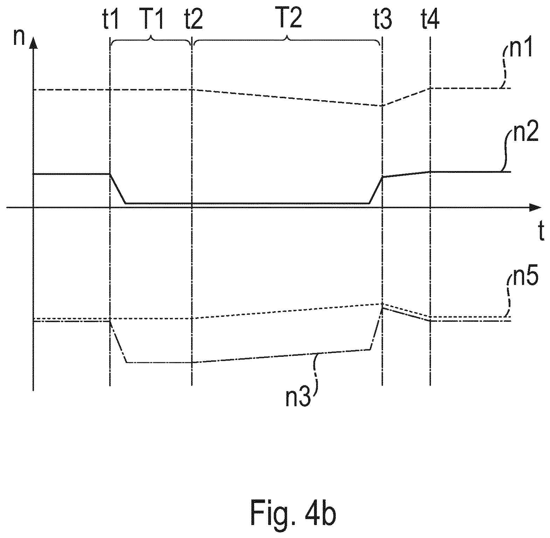

Gezeigt in Fig. 4a ist eine Antriebseinrichtung des Fahrrads der vierten Ausführungsform. Fig. 4b zeigt beispielhaft Verläufe der Drehzahlen n gegen die Zeit t für die vierte Ausführungsform. Es wird im Folgenden lediglich auf Unterschiede zur ersten Ausführungsform eingegangen. Der Freilauf 11 ist dabei zwischen dem Sonnenrad 12 des ersten Planetensatzes 9 und einem Planetenträger 21 des dritten Planetensatzes 20 angeordnet. Der Freilauf 11 übt dabei eine ähnliche Funktion wie in den vorherigen Ausführungsformen aus, nämlich eine Drehmomentrückwirkung auf die Kurbelwelle 3 zu unterbinden, falls der Fahrer mit dem Pedalieren aufhört.

Zum Zeitpunkt t1 sinkt die Drehzahl n2 des Planetenträgers 17, welcher drehfest mit der Kurbelwelle 3 verbunden ist, ab. Die Drehzahl n1 des Abtriebsrads 6 bleibt während der vorbestimmten Zeitdauer T1 zunächst konstant durch ein Halten der Drehzahl an der zweiten elektrischen Maschine 46. Die Drehzahl n3 des Sonnenrads 12 des ersten Planetensatzes erhöht sich dadurch. Hier bezieht sich das Erhöhen der Drehzahl n3 wiederum auf den absoluten Wert, vernachlässigend die Drehrichtung. Eine Drehzahl n5 des Planetenträgers 21 des dritten Planetensatzes 20 bleibt für die vorbestimmte Zeitdauer T1 konstant. Der Freilauf 11 hebt damit ab. Zum Zeitpunkt t2 erfolgt eine Verringerung der Drehzahl n5 des Planetenträgers 21 des dritten Planetensatzes 20 durch Verringern der Drehzahl des Ausgangselements der ersten elektrischen Maschine 8. Ebenfalls erfolgt ab t2 ein Verringern der Drehzahl n der zweiten elektrischen Maschine 46. Damit nimmt die Drehzahl n1 des Abtriebsrad 6 ab. Damit nimmt auch die Drehzahl n3 des Sonnenrads 12 des ersten Planetensatzes 9 ab. Kurz vor dem Zeitpunkt t3 beginnt der Fahrer erneut mit dem Pedalieren, die Drehzahl n2 steigt. Damit sinkt die Drehzahl n3 des Sonnenrads 12 des ersten Planetensatzes 9. Der Freilauf 11 greift, und es erfolgt ein Regeln S1.1 der ersten elektrischen Maschine 8, um das vorbestimmte Übersetzungsverhältnis am Überlagerungsgetriebe 4 erneut zu erzeugen. Dabei erhöhen sich, zwischen t3 und t4, die Drehzahl n5 des Planetenträgers 21 des dritten Planetensatzes 20 und damit die Drehzahl n3 des Sonnenrads 12 des ersten Planetensatzes 9, wobei der Freilauf 11 zwischen diesen Zeitpunkten t3 und t4 synchron ist. Die Drehzahl n1 des Abtriebsrads 6 erhöht sich durch erhöhte Drehzahl der zweiten elektrischen Maschine 46. Es erfolgt ein Übertragen von Antriebskraft von der zweiten elektrischen Maschine 46 auf das Abtriebsrad 6. Ab dem Zeitpunkt t4 liegt eine ähnliche Situation wie vor dem Zeitpunkt t1 vor.

### Bezugszeichen

- 3: Kurbelwelle
- 4: Überlagerungsgetriebe
- 6: Abtriebsrad
- 8: erste elektrische Maschine
- 9: (erster) Planetensatz
- 10: Gehäuse
- 11: Freilauf
- 12: Sonnenrad des ersten Planetensatzes
- 16: Hohlrad des ersten Planetensatzes
- 17: Planetenträger des ersten Planetensatzes
- 18: (zweiter) Planetensatz
- 19: Sonnenrad des zweiten Planetensatzes
- 20: (dritter) Planetensatz
- 21: Planetenträger des dritten Planetensatzes
- 24: Stirnradstufe
- 46: zweite elektrische Maschine
- 52: (vierten) Planetensatz
- 54: Stirnradsatz
- S0: (Schritt) Fortgesetztes Bestimmen, ob Rotation der Kurbelwelle zum Antreiben des Fahrzeugs vorliegt
- S1.1: (Schritt) Regeln, um ein vorbestimmtes Übersetzungsverhältnis zu erzeugen
- S1.2: (Schritt) Regeln, um Antriebskraft zu übertragen
- S2.1: (Schritt) Regeln, um Übersetzungsverhältnis zu halten
- S2.2: (Schritt) Regeln, um Reibung zumindest zu einem bestimmten Wert entgegenzuwirken
- S3.1: (Schritt) Regeln, um Übersetzungsverhältnis zu verringern
- S3.2: (Schritt) Regeln, um Reibung höchstens bis zu einem bestimmten Wert entgegenzuwirken
- S4: (Schritt) Erfassen einer Drehzahl eines Rads des Fahrzeugs
- S5: (Schritt) Erfassen einer Nutzereingabe
- S6: (Schritt) Bestimmen einer vorbestimmten Zeitdauer
- n: Drehzahl
- n1: Drehzahl des Abtriebsrads
- n2: Drehzahl der Kurbelwelle
- n3: Drehzahl des Sonnenrads des ersten Planetensatzes
- n5: Drehzahl des Planetenträgers des dritten Planetensatzes
- n6: Drehzahl des Planetenträger des ersten Planetensatzes
- n7: Drehzahl des Hohlrads der ersten Planetensatzes
- t: Zeit
- t1: (Zeitpunkt) Beenden einer Rotation der Kurbelwelle zum Antreiben
- t2: (Zeitpunkt) Keine Rotation der Kurbelwelle zum Antreiben seit vorbestimmter Zeitdauer
- t3: (Zeitpunkt) erneute Rotation der Kurbelwelle zum Antreiben
- t4: (Zeitpunkt) Rotation der Kurbelwelle zum Antreiben mit vorbestimmtem Übersetzungsverhältnis
- T1: Vorbestimmte Zeitdauer
- T2: Zeitdauer zum Verringern des Übersetzungsverhältnisses

## Patentansprüche

1. Verfahren zur Steuerung einer Antriebseinrichtung für ein muskelkraftbetriebenes Fahrzeug, wobei die Antriebseinrichtung eine Kurbelwelle (3), eine erste elektrische Maschine (8), eine zweite elektrische Maschine (46), ein Überlagerungsgetriebe (4) und einen Freilauf (11) aufweist, wobei die Kurbelwelle (3) über den Freilauf (11) mit dem Überlagerungsgetriebe (4) koppelbar ist, wobei die Antriebseinrichtung eingerichtet ist, Muskelkraft eines Fahrers von der Kurbelwelle (3) über das Überlagerungsgetriebe (4), mit dem die erste elektrische Maschine (8) und die zweite elektrischen Maschine (46) gekoppelt sind, auf ein Abtriebsrad (6) zu übertragen, wobei der Freilauf (11) dazu eingerichtet ist, um Kraftübertragung in Richtung der Kurbelwelle (3) in zumindest eine Drehrichtung zu verhindern, und wobei durch Einstellen einer Drehzahl der ersten elektrischen Maschine (8) ein Übersetzungsverhältnis am Überlagerungsgetriebe (4) zwischen der Kurbelwelle (3) und dem Abtriebsrad (6) eingestellt wird, wobei das Verfahren zumindest die Schritte aufweist:
Fortgesetztes Bestimmen (S0), ob eine Rotation der Kurbelwelle (3) zum Antreiben des Fahrzeugs vorliegt; falls bestimmt wird, dass eine Rotation der Kurbelwelle (3) zum Antreiben des Fahrzeugs vorliegt,
Regeln (S1.1) der Drehzahl der ersten elektrischen Maschine (8), um ein vorbestimmtes Übersetzungsverhältnis am Überlagerungsgetriebe (4) zu erzeugen; falls bestimmt wird, dass Rotation der Kurbelwelle (3) zum Antreiben des Fahrzeugs nicht mehr vorliegt,
Regeln (S2.1) der Drehzahl der ersten elektrischen Maschine (8) für maximal eine vorbestimmte Zeitdauer (T1), um das Übersetzungsverhältnis am Überlagerungsgetriebe (4) in einem Bereich des Übersetzungsverhältnisses zu halten, das am Überlagerungsgetriebe (4) bei dem Bestimmen (S0) eingestellt war, dass keine Rotation der Kurbelwelle (3) zum Antreiben des Fahrzeugs vorliegt; und falls bis zum Verstreichen der vorbestimmten Zeitdauer fortgesetzt bestimmt wird, dass keine Rotation der Kurbelwelle (3) zum Antreiben des Fahrzeugs vorliegt,
Regeln (S3.1) der Drehzahl der ersten elektrischen Maschine (8) nach Verstreichen der vorbestimmten Zeitdauer, um das Übersetzungsverhältnis am Überlagerungsgetriebe (4) basierend auf einem vorbestimmten zeitlichen Verlauf zu verringern.

2. Verfahren nach Anspruch 1, wobei, falls nach Verstreichen der vorbestimmten Zeitdauer, in welcher fortgesetzt bestimmt wurde, dass keine Rotation der Kurbelwelle (3) zum Antreiben des Fahrzeugs vorliegt, bestimmt wird, dass eine Rotation der Kurbelwelle (3) zum Antreiben des Fahrzeugs vorliegt, das Regeln (S1.1) der ersten elektrischen Maschine (8) erfolgt, um das vorbestimmte Übersetzungsverhältnis am Überlagerungsgetriebe (4) zu erzeugen.

3. Verfahren nach einem der vorhergehenden Ansprüche, ferner mit einem Erfassen (S4) einer Drehzahl eines Rads des Fahrzeugs, wobei das Regeln (S2.1) der ersten elektrischen Maschine (8), um das Übersetzungsverhältnis in dem Bereich zu halten, in Abhängigkeit von der erfassten Drehzahl des Rads erfolgt.

4. Verfahren nach einem der vorhergehenden Ansprüche, wobei der vorbestimmte zeitliche Verlauf für das Regeln (S3.1) der ersten elektrischen Maschine (8), um das Übersetzungsverhältnis zu verringern, einen linearen zeitlichen Verlauf der Drehzahl der ersten elektrischen Maschine (8) umfasst.

5. Verfahren nach einem der vorhergehenden Ansprüche, wobei die Antriebseinrichtung ferner eingerichtet ist, Antriebskraft der zweiten elektrischen Maschine (46) über das Überlagerungsgetriebe (4), mit dem die zweite elektrische Maschine (46) gekoppelt ist, auf das Abtriebsrad (6) zu übertragen, ferner mit den Schritten: falls bestimmt wird, dass Rotation der Kurbelwelle (3) zum Antreiben des Fahrzeugs nicht mehr vorliegt, Regeln (S2.2) der zweiten elektrischen Maschine (46) für maximal die vorbestimmte Zeitdauer (T1), um einer Reibung, welche der Antriebskraft zum Antreiben des Fahrzeugs entgegenwirkt, so entgegenzuwirken, dass die Antriebseinrichtung antriebsfrei ist und der Reibung zumindest zu einem bestimmten Wert entgegengewirkt wird; und falls bis zum Verstreichen der vorbestimmten Zeitdauer fortgesetzt bestimmt wird, dass keine Rotation der Kurbelwelle (3) zum Antreiben des Fahrzeugs vorliegt, Regeln (S3.2) der zweiten elektrischen Maschine (46), um der Reibung höchstens bis zu dem bestimmten Wert entgegenzuwirken.

6. Verfahren nach Anspruch 5, wobei, falls nach Verstreichen der vorbestimmten Zeitdauer, in welcher fortgesetzt bestimmt wurde, dass keine Rotation der Kurbelwelle (3) zum Antreiben des Fahrzeugs vorliegt, bestimmt wird, dass eine Rotation der Kurbelwelle (3) zum Antreiben des Fahrzeugs vorliegt, ein Regeln (S1.2) der zweiten elektrischen Maschine (46) erfolgt, um Antriebskraft von der zweiten elektrischen Maschine (46) über das Überlagerungsgetriebe (4) auf das Abtriebsrad (6) zum Antreiben des Fahrzeugs zu übertragen.

7. Verfahren nach einem der Ansprüche 5 oder 6, wobei Antriebskraft zum Antreiben des Fahrzeugs vom Abtriebsrad (6) über einen Freilauf auf ein angetriebenes Rad übertragbar ist, und wobei durch das Regeln (S2.2) der zweiten elektrischen Maschine (46), um der Reibung zumindest zu dem bestimmten Wert entgegenzuwirken, der Freilauf synchron bleibt.

8. Verfahren nach einem der Ansprüche 5 bis 7, ferner mit einem Erfassen (S4) einer Drehzahl eines Rads des Fahrzeugs, wobei das Regeln (S2.2) der zweiten elektrischen Maschine (46), um der Reibung zumindest zu dem bestimmten Wert entgegenzuwirken, und das Regeln (S3.2) der zweiten elektrischen Maschine (46), um der Reibung bis zu dem bestimmten Wert entgegenzuwirken, ein Regeln (S2.2; S3.2) einer Drehzahl der zweiten elektrischen Maschine (46) ist und in Abhängigkeit von der erfassten Drehzahl des Rads erfolgt.

9. Verfahren nach einem der vorhergehenden Ansprüche, wobei die erste elektrische Maschine (8) bis zu einem ersten maximalen Drehmoment geregelt wird, um eine Sicherheitsfunktion der ersten elektrischen Maschine (8) umzusetzen.

10. Verfahren nach einem der Ansprüche 5 bis 9, wobei die zweite elektrische Maschine (46) bis zu einem zweiten maximalen Drehmoment geregelt wird, um eine Sicherheitsfunktion der zweiten elektrischen Maschine (46) umzusetzen.

11. Verfahren nach einem der vorhergehenden Ansprüche, wobei, falls nachdem bestimmt wurde, dass Rotation der Kurbelwelle (3) zum Antreiben des Fahrzeugs für maximal die vorbestimmte Zeitdauer (T1) nicht mehr vorliegt, bestimmt wird, dass eine Rotation der Kurbelwelle (3) zum Antrieben des Fahrzeugs vorliegt, das Regeln (S1.1) der ersten elektrischen Maschine (8), um das vorbestimmte Übersetzungsverhältnis zu erzeugen, und das Regeln (S1.2) der zweiten elektrischen Maschine (46), um Antriebskraft von der zweiten elektrischen Maschine (46) auf das Abtriebsrad (6) zum Antreiben des Fahrzeugs zu übertragen, erfolgt.

12. Verfahren nach einem der vorhergehenden Ansprüche 1 bis 7 oder 9 bis 11, ferner mit einem Erfassen (S4) einer Drehzahl eines Rads des Fahrzeugs, wobei das Regeln (S1.1; S2.1; S3.1) der ersten elektrischen Maschine (8) und das Regeln (S1.2; S2.2; S3.2) der zweiten elektrischen Maschine (46) nur erfolgt, wenn die erfasste Drehzahl des Rads größer als eine Mindestdrehzahl des Rads ist;
oder nach Anspruch 8, mit dem Erfassen (S4) einer Drehzahl eines Rads des Fahrzeugs, wobei das Regeln (S1.1; S2.1; S3.1) der ersten elektrischen Maschine (8) und das Regeln (S1.2; S2.2; S3.2) der zweiten elektrischen Maschine (46) nur erfolgt, wenn die erfasste Drehzahl des Rads größer als eine Mindestdrehzahl des Rads ist.

13. Verfahren nach einem der vorhergehenden Ansprüche, ferner mit einem Erfassen (S5) einer Nutzereingabe und mit einem Bestimmen (S6) der vorbestimmten Zeitdauer in Abhängigkeit von der erfassten Nutzereingabe.

14. Verfahren nach einem der vorhergehenden Ansprüche, wobei die erste elektrische Maschine (8) und die zweite elektrische Maschine (46) mit elektrischer Energie eines Energiespeichers versorgt werden, und wobei das Regeln (S1.1; S2.1; S3.1) der ersten elektrischen Maschine (8) und das Regeln (S1.2; S2.2; S3.2) der zweiten elektrischen Maschine (46) nur erfolgt, wenn der Energiespeicher zumindest einen bestimmten Ladezustand aufweist.

15. Verfahren nach einem der vorhergehenden Ansprüche, wobei das Regeln (S1.1; S2.1; S3.1) der ersten elektrischen Maschine (8) und das Regeln (S1.2; S2.2; S3.2) der zweiten elektrischen Maschine (46) in Abhängigkeit von einer relativen Position des Freilaufs (11) im Überlagerungsgetriebe (4) erfolgt.

16. Steuergerät, welches eingerichtet ist, ein Verfahren nach einem der vorhergehenden Ansprüche auszuführen, um die Antriebseinrichtung zu steuern, wobei das Steuergerät Eingabeschnittstellen zum Empfangen von Daten und Ausgabeschnittstellen zum Senden von Daten aufweist.

17. Fahrrad mit mindestens zwei Rädern, einer Antriebseinrichtung und einem Steuergerät nach Anspruch 16.

## Claims

1. Method for controlling a drive device for a muscle-powered vehicle, wherein the drive device has a crankshaft (3), a first electric machine (8), a second electric machine (46), a superimposed transmission (4) and a freewheel (11), wherein the crankshaft (3) can be coupled to the superimposed transmission (4) via the freewheel (11), wherein the drive device is configured to transmit muscle force of a rider from the crankshaft (3) to an output wheel (6) via the superimposed transmission (4), to which the first electric machine (8) and the second electric machine (46) are coupled, wherein the freewheel (11) is configured to prevent transmission of force in the direction of the crankshaft (3) in at least one direction of rotation, and wherein a transmission ratio at the superimposed transmission (4) between the crankshaft (3) and the output wheel (6) is set by setting a rotational speed of the first electric machine (8), wherein the method has at least the steps of:
continuing to determine (S0) whether there is a rotation of the crankshaft (3) for driving the vehicle; if it is determined that there is a rotation of the crankshaft (3) for driving the vehicle,
regulating (S1.1) the rotational speed of the first electric machine (8) in order to generate a predetermined transmission ratio at the superimposed transmission (4);
if it is determined that rotation of the crankshaft (3) for driving the vehicle is no longer present,
regulating (S2.1) the rotational speed of the first electric machine (8) for a maximum predetermined period of time (T1) in order to maintain the transmission ratio at the superimposed transmission (4) in a region of the transmission ratio which was set at the superimposed transmission (4) when determining (S0) that there is no rotation of the crankshaft (3) for driving the vehicle;
and if it is continuously determined that there is no rotation of the crankshaft (3) for driving the vehicle until the predetermined time period has elapsed,
regulating (S3.1) the rotational speed of the first electric machine (8) after the predetermined time period has elapsed in order to reduce the transmission ratio at the superimposed transmission (4) on the basis of a predetermined time profile.

2. Method according to Claim 1, wherein, if, after the predetermined time period has elapsed, in which it has been continuously determined that there is no rotation of the crankshaft (3) for driving the vehicle, it is determined that there is a rotation of the crankshaft (3) for driving the vehicle, regulating (S1.1) the first electric machine (8) is carried out in order to generate the predetermined transmission ratio at the superimposed transmission (4).

3. Method according to either of the preceding claims, further comprising detecting (S4) a rotational speed of a wheel of the vehicle, wherein regulating (S2.1) the first electric machine (8) in order to keep the transmission ratio in the region is carried out in a manner dependent on the detected rotational speed of the wheel.

4. Method according to one of the preceding claims, wherein the predetermined time profile for regulating (S3.1) the first electric machine (8) in order to reduce the transmission ratio comprises a linear time profile of the rotational speed of the first electric machine (8).

5. Method according to one of the preceding claims, wherein the drive device is furthermore configured to transmit drive force of the second electric machine (46) to the output wheel (6) via the superimposed transmission (4), to which the second electric machine (46) is coupled, furthermore having the steps: if it is determined that rotation of the crankshaft (3) for driving the vehicle is no longer present, regulating (S2.2) the second electric machine (46) for at most the predetermined time period (T1) in order to counteract friction which counteracts the drive force for driving the vehicle, such that the drive device is drive-free and the friction is counteracted at least to a specific value; and, if it is determined, until the predetermined period of time elapses, that there is no rotation of the crankshaft (3) for driving the vehicle, regulating (S3.2) the second electric machine (46) in order to counteract the friction at most up to the specific value.

6. Method according to Claim 5, wherein, if, after the predetermined time period has elapsed, in which it has been continuously determined that there is no rotation of the crankshaft (3) for driving the vehicle, it is determined that there is a rotation of the crankshaft (3) for driving the vehicle, regulating (S1.2) the second electric machine (46) is carried out in order to transmit drive force from the second electric machine (46) via the superimposed transmission (4) to the output wheel (6) for driving the vehicle.

7. Method according to either of Claims 5 or 6, wherein drive force for driving the vehicle can be transmitted from the output wheel (6) to a driven wheel via a freewheel, and wherein the freewheel remains synchronous by regulating (S2.2) the second electric machine (46) in order to counteract the friction at least to the specific value.

8. Method according to one of Claims 5 to 7, further comprising detecting (S4) a rotational speed of a wheel of the vehicle, wherein regulating (S2.2) the second electric machine (46) in order to counteract the friction at least to the specific value and regulating (S3.2) the second electric machine (46) in order to counteract the friction up to the specific value are regulating (S2.2; S3.2) of a rotational speed of the second electric machine (46) and take place in a manner dependent on the detected rotational speed of the wheel.

9. Method according to one of the preceding claims, wherein the first electric machine (8) is regulated up to a first maximum torque in order to implement a safety function of the first electric machine (8).

10. Method according to one of Claims 5 to 9, wherein the second electric machine (46) is regulated up to a second maximum torque in order to implement a safety function of the second electric machine (46).

11. Method according to one of the preceding claims, wherein, if, after it has been determined that rotation of the crankshaft (3) for driving the vehicle is no longer present for at most the predetermined time period (T1), it is determined that there is a rotation of the crankshaft (3) for driving the vehicle, regulating (S1.1) the first electric machine (8) in order to generate the predetermined transmission ratio and regulating (S1.2) the second electric machine (46) in order to transmit drive force from the second electric machine (46) to the output wheel (6) for driving the vehicle are carried out.

12. Method according to one of the preceding Claims 1 to 7 or 9 to 11, further comprising detecting (S4) a rotational speed of a wheel of the vehicle, wherein regulating (S1.1; S2.1; S3.1) the first electric machine (8) and regulating (S1.2; S2.2; S3.2) the second electric machine (46) take place only if the detected rotational speed of the wheel is greater than a minimum rotational speed of the wheel;
or according to Claim 8, comprising detecting (S4) a rotational speed of a wheel of the vehicle, wherein regulating (S1.1; S2.1; S3.1) the first electric machine (8) and regulating (S1.2; S2.2; S3.2) the second electric machine (46) take place only if the detected rotational speed of the wheel is greater than a minimum rotational speed of the wheel.

13. Method according to one of the preceding claims, further comprising detecting (S5) a user input and determining (S6) the predetermined time period in a manner dependent on the detected user input.

14. Method according to one of the preceding claims, wherein the first electric machine (8) and the second electric machine (46) are supplied with electrical energy of an energy store, and wherein regulating (S1.1; S2.1; S3.1) the first electric machine (8) and regulating (S1.2; S2.2; S3.2) the second electric machine (46) take place only if the energy store has at least a specific charge state.

15. Method according to one of the preceding claims, wherein regulating (S1.1; S2.1; S3.1) the first electric machine (8) and regulating (S1.2; S2.2; S3.2) the second electric machine (46) take place in a manner dependent on a relative position of the freewheel (11) in the superimposed transmission (4).

16. Control unit configured to carry out a method according to one of the preceding claims in order to control the drive device, wherein the control unit has input interfaces for receiving data and output interfaces for transmitting data.

17. Bicycle having at least two wheels, a drive device and a control unit according to Claim 16.

## Revendications

1. Procédé de commande d'un dispositif d'entraînement pour un véhicule à propulsion musculaire, le dispositif d'entraînement comportant un vilebrequin (3), une première machine électrique (8), une deuxième machine électrique (46), une transmission à superposition (4) et une roue libre (11), le vilebrequin (3) pouvant être couplé par la roue libre (11) à la transmission à superposition (4), le dispositif d'entraînement étant mis au point pour transférer la puissance musculaire d'un conducteur depuis le vilebrequin (3) sur une roue de sortie (6) par la transmission à superposition (4), avec lequel la première machine électrique (8) et la deuxième machine électrique (46) sont couplées, la roue libre (11) étant mise au point pour empêcher la transmission de force en direction du vilebrequin (3) dans au moins une direction de rotation, et le réglage d'une vitesse de rotation de la première machine électrique (8) permettant de régler un rapport de transmission sur la transmission à superposition (4) entre le vilebrequin (3) et la roue de sortie (6), le procédé comportant au moins les étapes :
Détermination en continu (S0) pour savoir s'il y a une rotation du vilebrequin (3) pour entraîner le véhicule ;
s'il est déterminé qu'il y a une rotation du vilebrequin (3) pour entraîner le véhicule,
régulation (S1.1) de la vitesse de rotation de la première machine électrique (8) pour produire un rapport de transmission prédéterminé sur la transmission à superposition (4) ; s'il est déterminé qu'il n'y a plus de rotation du vilebrequin (3) pour entraîner le véhicule,
régulation (S2.1) de la vitesse de rotation de la première machine électrique (8) pendant une durée maximale prédéterminée (T1) pour maintenir le rapport de transmission sur la transmission à superposition (4) dans une plage du rapport de transmission, qui était réglé sur la transmission à superposition (4) lors de la détermination (S0) de l'absence d'une rotation du vilebrequin (3) pour entraîner le véhicule , et s'il est déterminé jusqu'à l'expiration de la durée prédéterminée qu'il n'y a pas de rotation du vilebrequin (3) pour entraîner le véhicule,
régulation (S3.1) de la vitesse de rotation de la première machine électrique (8) après expiration de la durée prédéterminée pour réduire le rapport de vitesse sur la transmission à superposition (4) sur la base d'une évolution temporelle prédéterminée.

2. Procédé selon la revendication 1, la régulation (S1.1) de la première machine électrique (8) étant effectuée pour générer le rapport de transmission prédéterminé sur la transmission à superposition (4) s'il est déterminé, après expiration de la durée prédéterminée au cours de laquelle il a été déterminé en continu qu'il n'y avait pas de rotation du vilebrequin (3) pour entraîner le véhicule, qu'il y a une rotation du vilebrequin (3) pour entraîner le véhicule.

3. Procédé selon l'une des revendications précédentes, avec en outre une détection (S4) d'une vitesse de rotation d'une roue du véhicule, la régulation (S2.1) de la première machine électrique (8) pour maintenir le rapport de transmission dans la plage, étant effectuée en fonction de la vitesse de rotation détectée de la roue.

4. Procédé selon l'une des revendications précédentes, l'évolution temporelle prédéterminée pour la régulation (S3.1) de la première machine électrique (8) pour réduire le rapport de transmission comprenant une évolution temporelle linéaire de la vitesse de rotation de la première machine électrique (8).

5. Procédé selon l'une des revendications précédentes, le dispositif d'entraînement étant en outre mis au point pour transmettre sur la roue de sortie (6) une force d'entraînement de la deuxième machine électrique (46) par la transmission à superposition (4), auquel la deuxième machine électrique (46) est couplée, en outre avec les étapes : s'il est déterminé qu'il n'y a plus de rotation du vilebrequin (3) pour entraîner le véhicule, régulation (S2.2) de la deuxième machine électrique (46) pendant la durée prédéterminée (T1) au maximum pour contrecarrer une friction, qui contrecarre la force motrice pour entraîner le véhicule, de telle sorte que le dispositif d'entraînement est sans entraînement et que la friction est contrecarrée au moins à hauteur d'une valeur donnée ; et s'il est déterminé en continu jusqu'à l'expiration de la durée prédéterminée qu'il n'y a pas de rotation du vilebrequin (3) pour entraîner le véhicule, régulation (S3.2) de la deuxième machine électrique (46) pour contrecarrer la friction au maximum jusqu'à la valeur donnée.

6. Procédé selon la revendication 5, une régulation (S1.2) de la deuxième machine électrique (46) étant effectuée pour transmettre une force d'entraînement depuis la deuxième machine électrique (46) sur la roue de sortie (6) par la transmission à superposition (4) pour entraîner le véhicule s'il est déterminé, après expiration de la durée prédéterminée au cours de laquelle il a été déterminé en continu qu'il n'y avait pas de rotation du vilebrequin (3) pour entraîner le véhicule, qu'il y a une rotation du vilebrequin (3) pour entraîner le véhicule.

7. Procédé selon l'une des revendications 5 ou 6, une force d'entraînement pour entraîner le véhicule de la roue de sortie (6) pouvant être transmise par une roue libre sur une roue entraînée, et dans la roue libre restant synchrone grâce à la régulation (S2.2) de la deuxième machine électrique (46) pour contrecarrer la friction au moins à hauteur de la valeur donnée.

8. Procédé selon l'une des revendications 5 à 7, avec en outre une détection (S4) d'une vitesse de rotation d'une roue du véhicule, la régulation (S2.2) de la deuxième machine électrique (46) pour contrecarrer la friction au moins à hauteur de la valeur donnée, et la régulation (S3.2) de la deuxième machine électrique (46) pour contrecarrer la friction jusqu'à la valeur donnée étant une régulation (S2.2 ; S3.2) d'une vitesse de rotation de la deuxième machine électrique (46) et étant effectuées en fonction de la vitesse de rotation détectée de la roue.

9. Procédé selon l'une des revendications précédentes, la première machine électrique (8) étant régulée jusqu'à un premier couple de rotation maxima pour mettre en œuvre une fonction de sécurité de la première machine électrique (8).

10. Procédé selon l'une des revendications 5 à 9, la deuxième machine électrique (46) étant régulée jusqu'à un deuxième couple de rotation maximal pour mettre en œuvre une fonction de sécurité de la deuxième machine électrique (46).

11. Procédé selon l'une des revendications précédentes, la régulation (S1.1) de la première machine électrique (8) pour générer le rapport de transmission prédéterminé et la régulation (S1.2) de la deuxième machine électrique (46) pour transmettre une force d'entraînement de la deuxième machine électrique (46) sur la roue de sortie (6) pour entraîner le véhicule étant effectuées s'il est déterminé, après avoir déterminé qu'il n'y avait plus de rotation du vilebrequin (3) pour entraîner le véhicule pendant au maximum la durée (T1) prédéterminée, qu'il y a une rotation du vilebrequin (3) pour entraîner le véhicule.

12. Procédé selon l'une des revendications précédentes 1 à 7 ou 9 à 11, avec en outre une détection (S4) d'une vitesse de rotation d'une roue du véhicule, la régulation (S1.1 ; S2.1 ; S3.1) de la première machine électrique (8) et la régulation (S1.2 ; S2.2 ; S3.2) de la deuxième machine électrique (46) n'étant effectuées que lorsque la vitesse de rotation détectée de la roue est supérieure à une vitesse de rotation minimale de la roue ;
ou selon la revendication 8, avec la détection (S4) d'une vitesse de rotation d'une roue du véhicule, la régulation (S1.1 ; S2.1 ; S3.1) de la première machine électrique (8) et la régulation (S1.2 ; S2.2 ; S3.2) de la deuxième machine électrique (46) n'étant effectuées que lorsque la vitesse de rotation détectée de la roue est supérieure à une vitesse de rotation minimale de la roue.

13. Procédé selon l'une des revendications précédentes, avec en outre une détection (S5) d'une entrée utilisateur et avec une détermination (S6) de la durée prédéterminée en fonction de l'entrée utilisateur détectée.

14. Procédé selon l'une des revendications précédentes, la première machine électrique (8) et la deuxième machine électrique (46) étant alimentées en énergie électrique d'un accumulateur d'énergie, et la régulation (S1.1 ; S2.1 ; S3.1) de la première machine électrique (8) et la régulation (S1.2 ; S2.2 ; S3.2) de la deuxième machine électrique (46) n'étant effectuées que lorsque l'accumulateur d'énergie présente au moins un état de charge donné.

15. Procédé selon l'une des revendications précédentes, la régulation (S1.1 ; S2.1 ; S3.1) de la première machine électrique (8) et la régulation (S1.2 ; S2.2 ; S3.2) de la deuxième machine électrique (46) étant effectuées en fonction d'une position relative de la roue libre (11) dans la transmission à superposition (4).

16. Appareil de commande qui est mis au point pour exécuter un procédé selon l'une des revendications précédentes pour commander le dispositif d'entraînement, l'appareil de commande comportant des interfaces d'entrée pour recevoir des données et des interfaces de sortie pour envoyer des données.

17. Bicyclette avec au moins deux roues, un dispositif d'entraînement et un appareil de commande selon la revendication 16.
